# EUROPEAN PATENT APPLICATION

(11) **EP 1 600 096 A2**
(43) Date of publication of application: **30.11.2005**
(21) Application number: 05253179.5
(22) Date of filing: 24.05.2005
(51) Int. Cl.: A47L 13/16, A47L 13/17, A47K 7/02, A61F 13/15

(54) **Substrates incorporating foam**

(30) Priority: 26.05.2004 US 854076; 27.10.2004 US 974920
(71) Applicant: The Clorox Company, Oakland, California 94612 (US)
(72) Inventor: Porticos, Richard, Pleasanton, CA 94588 (US); Dani, Nikhil P., Pleasanton, CA 94588 (US); Hill, Bernard, Pleasanton, CA 94588 (US); Ouellette, William, Pleasanton, CA 94588 (US)
(74) Representative: Greene, Simon Kenneth

(57) **Abstract**

A disposable substrate comprising foam particles or a foam layer with a nonwoven layer or an additional foam layer can be used to effectively clean surfaces. The disposable substrate can be a wipe or a cleaning pad. The cleaning pad can be attached to a cleaning implement. The disposable substrate can contain a cleaning composition. The disposable substrate can be used for personal care cleansing and absorption applications. One example of a suitable foam, for incorporation in the substrate, is melamine foam.

## Description

The present application relates to substrates incorporating foam.

### BACKGROUND OF THE INVENTION

### Field of the Invention

The present invention relates generally to disposable substrates incorporating foam. The foam can be a foam layer or foam particles. The substrate can be used for hard surface cleaning wipes and cleaning pads, for use on soft surfaces such as clothing and carpets, for personal care such as diapers or personal cleansing, and other uses. The foam can be incorporated as foam particles into a fibrous layer, as a foam layer or coating integrated with a fibrous or foam layer, as a foam side having another functional side, and as a mixed foam. These mixed foam substrates may also incorporate other scrubbing and actives delivery technologies. One suitable foam is melamine foam.

### Description of the Related Art

For many cleaning applications, it is desirable to combine a cleaning solution and an abrasive cleaning wipe. Several types of cleaning wipes, including disinfecting wipes, have been developed. Several technologies have been developed to provide more abrasive qualities to wipes, for example, U.S. Pat. App. 2004/0038613 to Mann et al. describes organic particles bound to a nonwoven with binder.

Melamine foam cleaning sponges have been developed. Special processes have been developed to improve the strength of melamine foam, so that it can be used in cleaning applications, for example, U.S. Pat. 6,608,118 to Kosaka et al. and U.S. Pat. 6,503,615 to Horii et al. These patents also describe a melamine foam layer as part of a multi-layer structure having additional layers such as a urethane sponge layer, a cellulose sponge layer, an unwoven fabric layer and an abrasive layer. The melamine foam layer may also have a bonded handle made of plastic. PCT App. WO03/103469 to Sauniere describes a melamine foam sheet that is optionally glued to a nonwoven backing.

Various foams and cleaning sponges are well known, for example U.S. Pat. 6,733,876 to Beardsley et al., U.S. Pat. 6,204,300 to Kageoka et al., and U.S. Pat. 5,102,923 to Porosoff et al. Polyurethane foam sponges may be made to release an antimicrobial material, for example, U.S. Pat. 6,375,964 to Cornelius.

PCT App. WO02/090483 to Allan et al. describes a wipe with surface texture produced from nodules of applied abrasive materials, for example, plastics of Shore D hardness from 40 to 100 including polyolefins, polyesters, polyvinyl chlorides, and polyamides. Specific examples include polyethylene, polypropylene, polybutylene, polyethylene terephthalate, polyethylenevinyl acetate, polystyrene, polyamide, polymethyl methacrylate, and polyvinyl chloride.

It is therefore an object of the present invention to provide an improved substrate that incorporates foam particles, a foam layer, or a mixed foam into a fibrous or foam substrate.

### SUMMARY OF THE INVENTION

In accordance with the above objects and those that will be mentioned and will become apparent below, one aspect of the present invention comprises a disposable substrate comprising:
a. a fibrous layer; and
b. melamine foam particles;
c. wherein said fibrous layer is formed by a method selected from the group consisting of hydroentangled, thermal bonded, chemical bonded, airlaid, wetlaid, and combinations thereof.

In accordance with the above objects and those that will be mentioned and will become apparent below, another aspect of the present invention comprises a disposable substrate comprising:
a. a layer selected from the group consisting of a fibrous layer, a foam layer, and combinations thereof; and
b. foam particles.

In accordance with the above objects and those that will be mentioned and will become apparent below, another aspect of the present invention comprises a disposable substrate comprising:
a. a fibrous layer;
b. a foam layer; and
c. an interface layer, wherein said interface layer comprises fibers from said fibrous layer intermingled with said foam layer.

### BRIEF DESCRIPTION OF THE DRAWINGS

Further features and advantages will become apparent from the following and more particular description of the preferred embodiments of the invention, as illustrated in the accompanying drawings, and in which like referenced characters generally refer to the same parts or elements throughout the views, and in which:
FIGURE 1 is a side view of one embodiment of the invention;
FIGURE 2 is a side view of one embodiment of the invention;
FIGURE 3 is a side view of one embodiment of the invention;
FIGURE 4 is a side view of one embodiment of the invention;
FIGURE 5 is a side view of a comparative example;
FIGURE 6 is an SEM of the fibrous face of a fibrous/foam substrate; and
FIGURE 7 is an SEM of the foam face of a fibrous/foam substrate.

### DETAILED DESCRIPTION OF THE INVENTION

Before describing the present invention in detail, it is to be understood that this invention is not limited to particularly exemplified systems or process parameters that may, of course, vary. It is also to be understood that the terminology used herein is for the purpose of describing particular embodiments of the invention only, and is not intended to limit the scope of the invention in any manner.

All publications, patents and patent applications cited herein, whether *supra* or *infra*, are hereby incorporated by reference in their entirety to the same extent as if each individual publication, patent or patent application was specifically and individually indicated to be incorporated by reference.

It must be noted that, as used in this specification and the appended claims, the singular forms "a," "an" and "the" include plural referents unless the content clearly dictates otherwise. Thus, for example, reference to a "surfactant" includes two or more such surfactants.

Unless defined otherwise, all technical and scientific terms used herein have the same meaning as commonly understood by one of ordinary skill in the art to which the invention pertains. Although a number of methods and materials similar or equivalent to those described herein can be used in the practice of the present invention, the preferred materials and methods are described herein.

The improved disinfecting or sanitizing wipe or pad can be used as a disinfectant, sanitizer, and/or sterilizer. As used herein, the term "disinfect" shall mean the elimination of many or all pathogenic microorganisms on surfaces with the exception of bacterial endospores. As used herein, the term "sanitize" shall mean the reduction of contaminants in the inanimate environment to levels considered safe according to public health ordinance, or that reduces the bacterial population by significant numbers where public health requirements have not been established. An at least 99% reduction in bacterial population within a 24 hour time period is deemed "significant." As used herein, the term "sterilize" shall mean the complete elimination or destruction of all forms of microbial life and which is authorized under the applicable regulatory laws to make legal claims as a "Sterilant" or to have sterilizing properties or qualities.

In the application, effective amounts are generally those amounts listed as the ranges or levels of ingredients in the descriptions, which follow hereto. Unless otherwise stated, amounts listed in percentage ("%'s") are in weight percent (based on 100% active) of the cleaning composition alone, not accounting for the substrate weight. Each of the noted cleaner composition components and substrates is discussed in detail below.

As used herein, "disposable" is used in its ordinary sense to mean an article that is disposed or discarded after a limited number of usage events, preferably less than 25, more preferably less than about 10, and most preferably less than about 2 entire usage events.

As used herein, the term "substrate" is intended to include any material that is used to clean an article or a surface. Examples of cleaning substrates include, but are not limited to, wipes, mitts, sponges, pads, or a single sheet of material which is used to clean a surface by hand or a sheet of material which can be attached to a cleaning implement, such as a floor mop, handle, or a hand held cleaning tool, such as a toilet cleaning device. The term "substrate" is also intended to include any material that is used for personal cleansing applications. The term "substrate" is also intended to include any material that is used for personal care absorption applications, for example a diaper. These substrates can be used for hard surface, soft surface, and personal care applications.

As used herein, "film" refers to a polymer film including flat nonporous films, and porous films such as microporous, nanoporous, closed or open celled, breathable films, or apertured films.

As used herein, "wiping" refers to any shearing action that the substrate undergoes while in contact with a target surface. This includes hand or body motion, substrate-implement motion over a surface, or any perturbation of the substrate via energy sources such as ultrasound, mechanical vibration, electromagnetism, and so forth.

As used herein, the term "fiber" includes both staple fibers, i. e., fibers which have a defined length between about 2 and about 20 mm, fibers longer than staple fiber but are not continuous, and continuous fibers, which are sometimes called "continuous filaments" or simply "filaments". The method in which the fiber is prepared will determine if the fiber is a staple fiber or a continuous filament.

As used herein, the term "fibrous layer" means a web having a structure of individual fibers or threads which are interlaid, in an identifiable manner as in a knitted or woven layer or not in an identifiable manner as in a nonwoven layer. Nonwoven layers have been formed from many processes, such as, for example, carded, airlaid, wetlaid, spunbond, meltblown, hydroentangled, hydrospun, thermal bonded, air-through bonded, needled, chemical bonded, and latex bonded web processes. The basis weight of nonwoven webs is usually expressed in ounces of material per square yard (osy) or grams per square meter (gsm) and the fiber diameters useful are usually expressed in microns, or in the case of staple fibers, denier. It is noted that to convert from osy to gsm, multiply osy by 33.91.

As used herein, the term "foam" includes solid porous foams, reticulated foams, water-disintegratable foams, open-cell foams, closed-cell foams, foamed synthetic resins, cellulosic foams, and natural foams.

### Foam particles in fibrous layer

Foam particles can be incorporated into a fibrous layer by carded, airlaid, wetlaid, spunbond, meltblown, hydroentangled, hydrospun, thermal bonded, air-through bonded, needled, chemical bonded, and latex bonded web processes. Foam particles can be incorporated into a fibrous layer by wetlaid, airlaid, or similar process technology. The foam particles can be bonded to the fibrous layer by hydroentanglement, thermal bonding, chemical bonding or similar process technology. Foam particles can be incorporated into the external region of the fibrous layer, the internal region of the fibrous layer, or throughout the fibrous layer.

### Foam particles in foam layer

Foam particles can be incorporated into a different foam layer. For example, preformed melamine foam particles can be incorporated into starch foam or polyurethane foam. Other possible foams for incorporation of foam particles include melamine foam, polyether foam, polyester foam, polyethylene foam, hydrophilic flexible foams, cellulose foam, foamed rubber materials, foamed silicones, high internal phase emulsion foam, vinyl foam, fiber-foam composites, and combinations thereof. Foam particles can be incorporated into the external region of the foam layer, the internal region of the foam layer, or throughout the foam layer.

### Fibrous layer intermingled into an interface layer of fibrous-foam layer

The foam layer and the fibrous layer can be adjacent and attached to one another at a interface layer, wherein fibers from the fibrous layer penetrate and are intermingled with the foam structure. The foam layer can be a melamine foam. The foam layer can also be polyurethane foam, polyether foam, polyester foam, polyethylene foam, hydrophilic flexible foams, cellulose foam, starch foam, foamed rubber materials, foamed silicones, high internal phase emulsion foam, vinyl foam, fiber-foam composites, and combinations thereof. The fibrous layer can be affixed by hydroentangling, needling, felting, spunlacing, or other process which results in the fibers of the fibrous layer penetrating into the foam layer. In a comparable example, the foam layer can also have the fibrous layer affixed with an adhesive, in which case the fibers of the fibrous layer do not penetrate into the foam layer. In one embodiment of the invention, adhesively affixed foam and fibrous layers are then subjected to a process, such as needling, which results in the fibers of the fibrous layer penetrating the foam layer. Then an interface layer is formed with contains fibers penetrating the foam layer.

### Mixed foam layer

The foam layer can be formed by generating a foam that is a mixture of two or more foam components. For example, the cleaning substrate can contain a foam layer comprising a mixture of two foam ingredients, for example, melamine foam and polyurethane foam.

### Foam particles

The foam particle can comprise melamine, polyurethane for example U.S. Pat. App. 2003/0191204 to Hermann et al., polyether for example U.S. Pat. App. 2003/0181538 to Martel et al. (also describing a variety of foams and method to grind foam), polyethylene foam for example VOLARA® from Voltek Corp., cellulose including regenerated cellulose foam, hydrophilic flexible foams, fiber-foam composites, foam rubber material (e.g. foamed styrene butadiene), foamed silicones, high internal phase emulsions such as the foams disclosed in U.S. Pat. No. 5,692,939 to DesMarais, foamed vinyl plastics, mixtures thereof, or any other suitable foam material. The melamine foam is described, for example, in U.S. Pat. 6,608,118 to Kosaka et al. and U.S. Pat. 6,503,615 to Horii et al., which are incorporated within. The melamine foam is known to wear by abrasion during the scrubbing process.

The foam particles can have a mean particle diameter of less than 100 mm. The foam particles can have a mean particle diameter of less than 50 mm. The foam particles can have a mean particle diameter of less than 10 mm. The foam particles can have a mean particle diameter of less than 1 mm. The foam particles can have a mean particle diameter of greater than 1 mm. The foam particles can comprise any number of irregular and regular shapes. In measuring the mean particle diameter, a spherical particle shape is assumed in referring to the median particle diameter, based on standard test methods available for the determination of particle diameters of regularly and irregularly shaped particles, such as, for example, ANSI test method B74.18-1884.

The foam particles can comprise greater than 1% by weight of the total substrate. The foam particles can comprise greater than 5% by weight of the total substrate. The foam particles can comprise greater than 10% by weight of the total substrate. The foam particles can comprise greater than 20% by weight of the total substrate. The foam particles can comprise less than 20% by weight of the total substrate.

The foam particles can be entirely on the external surface of a cleaning substrate. The foam particles can be present on the interior of the cleaning substrate. The foam particles can be present within one or more layers of the cleaning substrate.

### Fibrous layer

In one embodiment, the substrate can comprise a woven or knitted layer. In one embodiment, the substrate of the present invention comprises a fibrous layer of nonwoven or paper substrate. The term nonwoven is to be defined according to the commonly known definition provided by the "Nonwoven Fabrics Handbook" published by the Association of the Nonwoven Fabric Industry. A paper substrate is defined by EDANA (note 1 of ISO 9092-EN 29092) as a substrate comprising more than 50% by mass of its fibrous content is made up of fibers (excluding chemically digested vegetable fibers) with a length to diameter ratio of greater than 300, and more preferably also has density of less than 0.040 g/cm³. The definitions of both nonwoven and paper substrates do not include woven fabric or cloth or sponge. The substrate can be partially or fully permeable to water. The substrate can be flexible and the substrate can be resilient, meaning that once applied external pressure has been removed the substrate regains its original shape.

The substrate can comprise solely naturally occurring fibers, solely synthetic fibers, or any compatible combination of naturally occurring and synthetic fibers. The substrate can be composed of suitable unmodified and/or modified naturally occurring fibers including cotton, Esparto grass, bagasse, hemp, flax, silk, wool, wood pulp, chemically modified wood pulp, jute, ethyl cellulose, and/or cellulose acetate.
Various pulp fibers can be utilized including, but not limited to, thermomechanical pulp fibers, chemithermomechanical pulp fibers, chemimechanical pulp fibers, refiner mechanical pulp fibers, stone groundwood pulp fibers, peroxide mechanical pulp fibers and so forth.

Suitable synthetic fibers can comprise fibers of one, or more, of polyvinyl chloride, polyvinyl fluoride, polytetrafluoroethylene, polyvinylidene chloride, polyacrylics such as ORLON®, polyvinyl acetate, Rayon®, polyethylvinyl acetate, non-soluble or soluble polyvinyl alcohol, polyolefins such as polyethylene (e.g., PULPEX®) and polypropylene, polyamides such as nylon, polyesters such as DACRON® or KODEL®, polyurethanes, polystyrenes, and the like, including fibers comprising polymers containing more than one monomer.

The polymers suitable for the present invention include polyolefins, polyesters, polyamides, polycarbonates, polyurethanes, polyvinylchloride, polytetrafluoroethylene, polystyrene, polyethylene terephathalate, biodegradable polymers such as polylactic acid and copolymers and blends thereof. Suitable polyolefins include polyethylene; e.g., high density polyethylene, medium density polyethylene, low density polyethylene and linear low density polyethylene; polypropylene, e.g., isotactic polypropylene, syndiotactic polypropylene, blends of isotactic polypropylene and atactic polypropylene, and blends thereof; polybutylene, e.g., poly(1-butene) and poly(2-butene); polypentene, e.g., poly(1- pentene) and poly(2-pentene); poly(3-methyl-1-pentene); poly(4-methyl 1-pentene); and copolymers and blends thereof. Suitable copolymers include random and block copolymers prepared from two or more different unsaturated olefin monomers, such as ethylene/propylene and ethylene/butylene copolymers. Suitable polyamides include nylon 6, nylon 6/6, nylon 4/6, nylon 11, nylon 12, nylon 6/10, nylon 6/12, nylon 12/12, copolymers of caprolactam and alkylene oxide diamine, and the like, as well as blends and copolymers thereof. Suitable polyesters include polyethylene terephthalate, polytrimethylene terephthalate, polybutylene terephthalate, polytetramethylene terephthalate, polycyclohexylene-1,4-dimethylene terephthalate, and isophthalate copolymers thereof, as well as blends thereof.

Many polyolefins are available for fiber production, for example polyethylenes such as Dow Chemical's ASPUN 6811A linear low-density polyethylene, 2553 LLDPE and 25355 and 12350 high-density polyethylene are such suitable polymers. The polyethylenes have melt flow rates in g/10 min. at 190° F. and a load of 2.16 kg, of about 26, 40, 25 and 12, respectively. Fiber forming polypropylenes include Exxon Chemical Company's ESCORENE PD3445 polypropylene. Many other polyolefins are commercially available and generally can be used in the present invention. The particularly preferred polyolefins are polypropylene and polyethylene.

Examples of polyamides and their methods of synthesis may be found in "Polymer Resins" by Don E. Floyd (Library of Congress Catalog number 66-20811, Reinhold Publishing, N.Y., 1966). Particularly commercially useful polyamides are nylon 6, nylon-6,6, nylon-11 and nylon- 12. These polyamides are available from a number of sources such as Custom Resins, Nyltech, among others.

In addition, a compatible tackifying resin may be added to the extrudable compositions described above to provide tackified materials that autogenously bond or which require heat for bonding. Any tackifier resin can be used which is compatible with the polymers and can withstand the high processing (e.g., extrusion) temperatures. If the polymer is blended with processing aids such as, for example, polyolefins or extending oils, the tackifier resin should also be compatible with those processing aids. Generally, hydrogenated hydrocarbon resins are preferred tackifying resins, because of their better temperature stability. REGALREZ® and ARKON® P series tackifiers are examples of hydrogenated hydrocarbon resins. ZONATAC® 501 lite is an example of a terpene hydrocarbon. REGALREZ® hydrocarbon resins are available from Hercules Incorporated. ARKON® series resins are available from Arakawa Chemical (USA) Incorporated. The tackifying resins such as disclosed in U.S. Pat. No. 4,787,699, hereby incorporated by reference, are suitable. Other tackifying resins that are compatible with the other components of the composition and can withstand the high processing temperatures, can also be used.

Multicomponent resins comprising two or more polymers can also be used. It is desirable that the particular polymers used for the different components of multicomponent fibers in the practice of the invention have melting points different from one another. This is important not only in producing crimped fibers but also when through-air bonding is used as the bonding technique, wherein the lower melting polymer bonds the fibers together to form the fabric or web. It is desirable that the lower melting point polymers make up at least a portion of the outer region of the fibers. More particularly, the lower melting component should be located in an outer portion of the fiber so that it comes in contact with other fibers. For example, in a sheath/core fiber configuration, the lower melting point polymer component should be located in the sheath portion. In a side-by-side configuration, the lower melting point polymer will inherently be located on an outer portion of the fiber.

The proportion of higher and lower melting polymers in the multicomponent, multilobal fibers can range between about 10-90% by weight higher melting polymer and 10-90% lower melting polymer. In practice, only so much lower melting polymer is needed as will facilitate bonding between the fibers. Thus, a suitable fiber composition may contain about 40-80% by weight higher melting polymer and about 20-60% by weight lower melting polymer, desirably about 50-75% by weight higher melting polymer and about 25-50% by weight lower melting polymer. In a one embodiment, the lower melting point polymer is polyethylene and the higher melting point polymer is polypropylene. This embodiment may be preferred from the standpoint of cost and resulting properties of the cleaning substrate.

The disposable substrate of the invention may be a multilayer laminate. The disposable substrate can have solely foam layers, solely fibrous layers, or a combination of foam and fibrous layers. The disposable substrate can incorporate foam particles in any of the layers. The disposable substrate can be formed by a number of different techniques including but not limited to using adhesive bonding, needle punching, ultrasonic bonding, thermal calendering and through-air bonding. Such a multilayer laminate may be an embodiment wherein some of the layers are spunbond and some meltblown such as a spunbond/meltblown/spunbond (SMS) laminate as disclosed in U.S. Pat. No. 4,041,203 to Brock et al. and U.S. Pat. No. 5, 169,706 to Collier, et al., each hereby incorporated by reference. The SMS laminate may be made by sequentially depositing onto a moving conveyor belt or forming wire first a spunbond web layer, then a meltblown web layer and last another spunbond layer and then bonding the laminate in a manner described above. Alternatively, the three web layers may be made individually, collected in rolls and combined in a separate bonding step.

The fibers useful herein can be hydrophilic, hydrophobic or can be a combination of both hydrophilic and hydrophobic fibers. The particular selection of hydrophilic or hydrophobic fibers depends upon the other materials included and the desirable functional aspects of the substrate. Suitable hydrophilic fibers for use in the present invention include cellulosic fibers, modified cellulosic fibers, rayon, cotton, and polyester fibers such as hydrophilic nylon (HYDROFIL®). Suitable hydrophilic fibers can also be obtained by hydrophilizing hydrophobic fibers, such as surfactant-treated or silica-treated thermoplastic fibers derived from, for example, polyolefins such as polyethylene or polypropylene, polyacrylics, polyamides, polystyrenes, polyurethanes and the like. The surface of the hydrophobic thermoplastic fiber can be rendered hydrophilic by treatment with a surfactant, such as a nonionic or anionic surfactant, e.g., by spraying the fiber with a surfactant, by dipping the fiber into a surfactant or by including the surfactant as part of the polymer melt in producing the thermoplastic fiber. Upon melting and resolidification, the surfactant will tend to remain at the surfaces of the thermoplastic fiber. Suitable surfactants include nonionic surfactants such as Brij® 76 manufactured by ICI Americas, Inc. of Wilmington, Delaware, and various surfactants sold under the Pegosperse® trademark by Glyco Chemical, Inc. of Greenwich, Conn. Besides nonionic surfactants, anionic surfactants can also be used. These surfactants can be applied to the thermoplastic fibers at levels of, for example, from about 0.2 to about 1 g per square centimeter of thermoplastic fiber.

Another type of hydrophilic fiber for use in the present invention is chemically stiffened cellulosic fibers. As used herein, the term "chemically stiffened cellulosic fibers" means cellulosic fibers that have been stiffened by chemical means to increase the stiffness of the fibers under both dry and aqueous conditions. Such means can include the addition of a chemical stiffening agent that, for example, coats and/or impregnates the fibers. Such means can also include the stiffening of the fibers by altering the chemical structure, e.g., by crosslinking polymer chains.

Where non-thermoplastic or higher melting thermoplastic fibers are used in a layer (or a constituent component thereof), these fibers can optionally be combined with a thermoplastic material. Upon melting, at least a portion of this thermoplastic material migrates to the intersections of the fibers, typically due to inter-fiber capillary gradients. These intersections become bond sites for the thermoplastic material. When cooled, the thermoplastic materials at these intersections solidify to form the bond sites that hold the matrix or web of fibers together in each of the respective layers. This can be beneficial in providing additional overall integrity to the cleaning wipe.

Methods of making nonwovens are well known in the art. Generally, these nonwovens can be made by air-laying, wet-laying, meltblowing, coforming, spunbonding, or carding processes in which the fibers or filaments are first cut to desired lengths from long strands, passed into a water or air stream, and then deposited onto a screen through which the fiber-laden air or water is passed. The wetlaid process is described in U.S. 5,246,772 to Manning and U.S. 5,238,534 to Manning et al. The air-laying process is described in U.S. Pat. App. 2003/0036741 to Abba et al. and U.S. Pat. App. 2003/0118825 to Melius et al. The resulting layer, regardless of its method of production or composition, is then subjected to at least one of several types of bonding operations to anchor the individual fibers together to form a self-sustaining substrate. In the present invention the nonwoven substrate can be prepared by a variety of processes including, but not limited to, air-entanglement, hydroentanglement, thermal bonding, and combinations of these processes. Methods for preparing thermally bonded fibrous materials are described in U.S. Pat. 5,607,414 to Richards et al. and U.S. Pat. No. 5,549, 589 to Homey et al.

Amongst its various effects, bonding at the fiber intersections increases the overall compressive modulus and strength of the resulting thermally bonded member. In the case of the chemically stiffened cellulosic fibers, the melting and migration of the thermoplastic material also has the effect of increasing the average pore size of the resultant web, while maintaining the density and basis weight of the web as originally formed. This can improve the fluid acquisition properties of the thermally bonded web upon initial exposure to fluid, due to improved fluid permeability, and upon subsequent exposure, due to the combined ability of the stiffened fibers to retain their stiffness upon wetting and the ability of the thermoplastic material to remain bonded at the fiber intersections upon wetting and upon wet compression. In net, thermally bonded webs of stiffened fibers retain their original overall volume, but with the volumetric regions previously occupied by the thermoplastic material becoming open to thus increase the average inter-fiber capillary pore size.

Thermoplastic materials useful in the present invention can be in any of a variety of forms including particulates, fibers, or combinations of particulates and fibers. Thermoplastic fibers are a particularly preferred form because of their ability to form numerous inter-fiber bond sites. Suitable thermoplastic materials can be made from any thermoplastic polymer that can be melted at temperatures that will not extensively damage the fibers that comprise the primary web or matrix of each layer. Preferably, the melting point of this thermoplastic material will be less than about 190° C., and preferably between about 75° C. and about 175° C. In any event, the melting point of this thermoplastic material should be no lower than the temperature at which the thermally bonded absorbent structures, when used in the cleaning substrates, are likely to be stored. The melting point of the thermoplastic material is typically no lower than about 50° C.

Suitable thermoplastic fibers can be made from a single polymer (monocomponent fibers), or can be made from more than one polymer (e.g., bicomponent or multicomponent fibers). Multicomponent fibers are described in U.S. Pat. App. 2003/0106568 to Keck and Arnold. Bicomponent fibers are described in U.S. Pat. 6,613,704 to Arnold and Myers and references therein. Multicomponent fibers of a wide range of denier or dtex are described in U.S. Pat. App. 2002/0106478 to Hayase et al. The "bicomponent fibers" may be thermoplastic fibers that comprise a core fiber made from one polymer that is encased within a thermoplastic sheath made from a different polymer. The polymer comprising the sheath often melts at a different, typically lower, temperature than the polymer comprising the core. As a result, these bicomponent fibers provide thermal bonding due to melting of the sheath polymer, while retaining the desirable strength characteristics of the core polymer.

Suitable bicomponent fibers for use in the present invention can include sheath/core fibers having the following polymer combinations: polyethylene/polypropylene, polyethylvinyl acetate/ polypropylene, polyethylene/ polyester, polypropylene/ polyester, copolyester/ polyester, and the like. Particularly suitable bicomponent thermoplastic fibers for use herein are those having a polypropylene or polyester core, and a lower melting copolyester, polyethylvinyl acetate or polyethylene sheath (e.g., those available from Danaklon a/s, Chisso Corp., and CELBOND®, available from Hercules). These bicomponent fibers can be concentric or eccentric. As used herein, the terms "concentric" and "eccentric" refer to whether the sheath has a thickness that is even, or uneven, through the cross-sectional area of the bicomponent fiber. Eccentric bicomponent fibers can be desirable in providing more compressive strength at lower fiber thicknesses.

The dry, fibrous web can have a basis weight of between about 30 and about 200 grams per square meter. The density of the dry web can be measured after evaporating the liquid from the premoistened wipe, and the density can be less than about 0.15 grams per cubic centimeter. The density is the basis weight of the dry web divided by the thickness of the dry web, measured in consistent units, and the thickness of the dry web is measured using a circular load foot having an area of about 2 square inches and which provides a confining pressure of about 95 grams per square inch. In one embodiment, the dry web can have a basis weight of about 64 grams per square meter, a thickness of about 0.06 cm, and a density of about 0.11 grams per cubic centimeter.

In one embodiment, the dry fibrous web can comprise at least 50 percent by weight wood pulp fibers, and more preferably at least about 70 percent by weight wood pulp fibers. One particular airlaid nonwoven web which is suitable for use in the present invention comprises about 73.5 percent by weight cellulosic fibers (Southern softwood Kraft having an average fiber length of about 2.6 mm); about 10.5 percent by weight polyester fibers having a denier of about 1.35 gram/9000 meter of fiber length and a staple length of about 0.85 inch; and about 16 percent by weight of a binder composition comprising a styrene butadiene copolymer. The binder composition can be made using a latex adhesive commercially available as Rovene 5550 (49 percent solids styrene butadiene) available from Mallard Creek Polymers of Charlotte, N.C.

The following patents are incorporated herein by reference for their disclosure related to webs: U.S. Pat. No. 3,862,472; U.S. Pat. No. 3,982,302; U.S. Pat. No. 4,004,323; U.S. Pat. No. 4,057,669; U.S. Pat. No. 4,097,965; U.S. Pat. No. 4,176,427; U.S. Pat. No. 4,130,915; U.S. Pat. No. 4,135,024; U.S. Pat. No. 4,189,896; U.S. Pat. No. 4,207,367; U.S. Pat. No. 4,296, 161; U.S. Pat. No. 4,309,469; U. S. Pat. No. 4,682,942; U.S. Pat. No. 4,637,859; U.S. Pat. No. 5,223,096; U.S. Pat. No. 5,240,562; U.S. Pat. No. 5,556,509; and U.S. Pat. No. 5,580,423.

In one preferred embodiment, the cleaning sheet has at least two regions where the regions are distinguished by basis weight. Briefly, the measurement is achieved photographically, by differentiating dark (low basis weight) and light (high basis) network regions. In particular, the cleaning sheet comprises one or more low basis weight regions, wherein the low basis region(s) have a basis weight that is not more than about 80% of the basis weight of the high basis weight regions. In one preferred aspect, the first region is relatively high basis weight and comprises an essentially continuous network. The second region comprises a plurality of mutually discrete regions of relatively low basis weight and which are circumscribed by the high basis weight first region. In particular, a preferred cleaning sheet comprises a continuous region having a basis weight of from about 30 to about 120 grams per square meter and a plurality of discontinuous regions circumscribed by the high basis weight region, wherein the discontinuous regions are disposed in a random, repeating pattern and having a basis weight of not more than about 80% of the basis weight of the continuous region.

In one embodiment, the cleaning sheet will have, in addition to regions which differ with regard to basis weight, substantial macroscopic three-dimensionality. The term "macroscopic three-dimensionality", when used to describe three-dimensional cleaning sheets means a three-dimensional pattern is readily visible to the naked eye when the perpendicular distance between the viewer's eye and the plane of the sheet is about 12 inches. In other words, the three dimensional structures of the premoistened sheets of the present invention are cleaning sheets that are non-planar, in that one or both surfaces of the sheets exist in multiple planes. By way of contrast, the term "planar", refers to sheets having fine-scale surface aberrations on one or both sides, the surface aberrations not being readily visible to the naked eye when the perpendicular distance between the viewer's eye and the plane of the sheet is about 12 inches. In other words, on a macro scale the observer will not observe that one or both surfaces of the sheet will exist in multiple planes so as to be three-dimensional.

Briefly, macroscopic three-dimensionality is described in terms of average height differential, which is defined as the average distance between adjacent peaks and valleys of a given surface of a sheet, as well as the average peak-to-peak distance, which is the average distance between adjacent peaks of a given surface. Macroscopic, three-dimensionality is also described in terms of surface topography index of the outward surface of a cleaning sheet; surface topography index is the ratio obtained by dividing the average height differential of a surface by the average peak-to-peak distance of that surface. In a preferred embodiment, a macroscopically three-dimensional cleaning sheet has a first outward surface and a second outward surface wherein at least one of the outward surfaces has a peak-to-peak distance of at least about 1 mm and a surface topography index from about 0.01 mm to about 10 mm. The macroscopically three-dimensional structures of the pre-moistened wipes of the present invention optionally comprise a scrim, which when heated and the cooled, contract so as to provide further macroscopic three-dimensional structure.

In another alternative embodiment, the substrate can comprise a laminate of two outer hydroentangled webs, such as nonwoven webs of polyester, rayon fibers or blends thereof having a basis weight of about 10 to about 60 grams per square meter, joined to an inner constraining layer, which can be in the form of net like scrim material which contracts upon heating to provide surface texture in the outer layers.

The cleaning substrate can contain several fibrous layers, several foam layers, or one or more fibrous layers and one or more foam layers bonded together in order to maintain the integrity of the article. The layers can be heat spot bonded together, for example, using heat generated by ultrasonic sound waves. The bonding can be arranged such that geometric shapes and patterns, e.g. diamonds, circles, squares, etc. are created on the exterior surfaces of the layers and the resulting article.

The bonding pattern can be chosen in order to maximize stiffness of the substrate. This applies in particular when bonding is effected by adhesive (chemical, such as epoxy resin adhesive, or other adhesive) or by ultrasound. Thermal or pressure bonding can be used if the layers to be bonded are appropriate for this. One preferred bonding pattern is application of adhesive or ultrasonic bonding across the full area of the substrate. Generally such patterns do not take up substantially the entire area, but generally not more than 20%, preferably not more than 15%, but preferably at least 5%, of the area of the substrate is covered by bonds.

One preferred application pattern for adhesive, ultrasonic or other bonds is in the form of a number of stripes extending across the width of the substrate. Preferably the stripes are parallel. The direction can be chosen depending upon the direction in which stiffness is required. For instance, if stiffness in the machine direction (this direction being defined in relation to the manufacturing process for the substrate) is required, i.e. it is required to make folding along a line extending in the transverse direction more difficult, then the stripes preferably extend in the machine direction. Conversely, if transverse direction stiffness is required, then preferably stripes extending in the transverse direction are provided.

One example of a suitable bonding pattern is one of two sets of parallel stripes at different angles, for instance in cross-hatch form. Such systems can provide the effect of introduction of a net between two layers.

The above patterns for improvement of stiffness are useful when applied to adhesive or ultrasound bonding. However, such patterns can alternatively be applied using hot melt polymer printed onto the substrate, either between layers or on an exterior surface of one of the layers. Such patterns can be applied using any low melting polymer that is flexible after application and drying and capable of producing a continuous film. Suitable polymers include polyethylene. Application of hot melt polymer can be for instance by screen or gravure printing. Screen printing is preferred. Application of hot melt polymer is preferably on an exterior surface on one of the layers.

Bonding can be effected after all layers intended to form the substrate have been assembled. In some embodiments, however, two or more layers can be prebonded prior to contacting these layers with additional layers to form the substrate.

It is also possible to enhance stiffness of the wipe by means of embossing predetermined patterns onto one or more layers. The patterns are advantageously those discussed above in the context of bonding patterns. Embossing can be achieved by application of the desired pattern under pressure at high or low temperature. Alternatively ultrasound methods can be used for embossing. If any layer is to be embossed it is preferably subjected to embossing prior to contact with other layers intended to form the substrate.

The stiffness of the substrate when wet can be an important feature. Stiffness is expressed in Taber stiffness units, preferably measured in accordance with ASTM D-5650 (resistance to bending of paper of low bending stiffness). Stiffness of the substrate when dry is measured before it is used for cleaning a surface. Stiffness of the substrate when wet is measured after it has been saturated in water. Stiffness when dry can be at least 5, preferably at least 6, or at least 7, or at least 8 Taber stiffness units. In particularly cases stiffness when dry is at least 9 Taber stiffness units. A particular advantage of some stiffness-enhancing aspects of the invention is that the Taber stiffness when wet is at least 5, or at least 6, or at least 7, or at least 8. In particular embodiments the stiffness when wet is at least 9 Taber stiffness units. Some embodiments have stiffness when wet at least 50%, or at least 60%, or at least 80%, or at least 90% of stiffness when dry.

The layers can be bonded together by nonwoven processes, such as hydroentangling, needling, felting, spunlacing, or other process which results in the fibers of the fibrous layer penetrating another layer.

The cleaning substrate can optionally comprise a film layer. Film substrate materials can be comprised of polyolefin such as polyethylene, including linear low-density polyethylene (LLDPE), low density polyethylene (LDPE), ultra low density polyethylene (ULDPE), high density polyethylene (HDPE), or polypropylene and blends thereof with the above and other materials. Examples of other suitable polymeric materials which may be used include, but are not limited to, polyester, polyurethanes, water-soluble polymers, compostable or biodegradable polymers, heat shrink polymers, thermoplastic elastomers, metallocene catalyst-based polymers (e.g., Insite® available from Dow Chemical and Exxact® available from Exxon), and breathable polymers, apertured film, macroscopically expanded three-dimensional formed films, foams, filled compositions. The substrate material can comprise a laminate of one or more elastic layers and one or more non-elastic layers, polymeric films such as thermoplastic films of polyethylene or polypropylene, composite materials such as a film-coated nonwoven material or materials including one or more apertures or apertured regions. Exemplary polyethylene films are manufactured by Clopay Plastic Products Co. of Cincinnati, Ohio under the designation P18- 1401 and by Ethyl Corporation, Visqueen Division, of Terre Haute, Ind., under the designation XP-39385. Substrates in this category include membranes, microporous membranes, natural sponges, synthetic sponges, polymeric netted meshes, formed films, and the like. Exemplary water-soluble polymer films include polyvinyl alcohol, polyethylene oxide, copolymer of vinyl alcohol and poly(oxylene)acrylate, and hydroxypropylcellulose.

### Cleaning Substrate

The disposable cleaning substrate described herein can be used as a premoistened substrate, as a dry substrate, or in combination with a cleaning implement as described herein. Thus, the disposable cleaning substrate includes cleaning pads attached to cleaning implements.

The size and shape of the cleaning substrate can vary with respect to the intended application and/or end use of the same. The cleaning substrate can have a substantially rectangular shape of a size that allows it to readily engage standard cleaning equipment or tools such as, for example, mop heads, duster heads, brush heads and so forth. As one particular example, in order to fit a standard mop head, the cleaning sheet can have a length of about 28 cm and a width of about 22 cm. However, the particular size and/or shape of cleaning substrate can vary as needed to fit upon or otherwise conform to a specific cleaning tool. In an alternative configuration, the cleaning substrate of the present invention could be formed into a mitten shaped article for wiping and cleaning, which would fit over the users hand.

The cleaning substrates can be provided dry or pre-moistened. In one aspect, dry cleaning substrates can be provided with dry or substantially dry cleaning or disinfecting agents coated on or in the fibrous or foam layer. In addition, the cleaning substrates can be provided in a pre-moistened and/or saturated condition. The wet cleaning substrates can be maintained over time in a sealable container such as, for example, within a bucket with an attachable lid, sealable plastic pouches or bags, canisters, jars, tubs and so forth. Desirably the wet, stacked cleaning substrates are maintained in a resealable container. The use of a resealable container is particularly desirable when using volatile liquid compositions since substantial amounts of liquid can evaporate while using the first sheets thereby leaving the remaining sheets with little or no liquid. Exemplary resealable containers and dispensers include, but are not limited to, those described in U.S. Pat. No. 4,171,047 to Doyle et al., U.S. Pat. No. 4,353,480 to McFadyen, U.S. Pat. No. 4,778,048 to Kaspar et al., U.S. Pat. No. 4,741,944 to Jackson et al., U.S. Pat. No. 5, 595,786 to McBride et al.; the entire contents of each of the aforesaid references are incorporated herein by reference. The cleaning substrates can be incorporated or oriented in the container as desired and/or folded as desired in order to improve ease of use or removal as is known in the art.

With regard to pre-moistened substrates, a selected amount of liquid is added to the container such that the cleaning substrates contain the desired amount of liquid. Typically, the cleaning substrates are stacked and placed in the container and the liquid subsequently added thereto. The substrate can subsequently be used to wipe a surface as well as act as a vehicle to deliver and apply cleaning liquids to a surface. The moistened and/or saturated cleaning substrates can be used to treat various surfaces. As used herein "treating" surfaces is used in the broad sense and includes, but is not limited to, wiping, polishing, swabbing, cleaning, washing, disinfecting, scrubbing, scouring, sanitizing, and/or applying active agents thereto. The amount and composition of the liquid added to the cleaning sheets will vary with the desired application and/or function of the substrates. As used herein the term "liquid" includes, but is not limited to, solutions, emulsions, suspensions and so forth. Thus, liquids may comprise and/or contain one or more of the following: disinfectants; antiseptics; diluents; surfactants, such as nonionic, anionic, cationic, waxes; antimicrobial agents; sterilants; sporicides; germicides; bactericides; fungicides; virucides; protozoacides; algicides; bacteriostats; fungistats; virustats; sanitizers; antibiotics; pesticides; and so forth. Numerous cleaning compositions and compounds are known in the art and can be used in connection with the present invention.

The cleaning substrates of the present invention can be provided in a kit form, wherein a plurality of cleaning substrates and a cleaning tool are provided in a single package.

In one embodiment, the pre-moistened substrate is made by wetting the dry substrate with at least about 1.0 gram of liquid composition per gram of dry fibrous web. In one embodiment, the dry substrate is wetted with at least about 1.5 or at least about 2.0 grams of liquid composition per gram of the dry fibrous web. The exact amount of solution impregnated on the substrate will depend on the product's intended use. For pre-moistened wipes intended to be used for cleaning counter tops, stovetops, glass etc., optimum wetness may be from about 1 gram of solution to about 5 grams of solution per gram of wipe. In the context of a floor-cleaning wipe, the premoistened substrate can include an absorbent core reservoir with a large capacity to absorb and retain fluid. The absorbent reservoir can have a fluid capacity of from about 5 grams to about 15 grams per gram of absorptive material. Pre-moistened wipes intended to be used for the cleaning of walls, exterior surfaces, etc. can have a capacity of from about 2 grams to about 10 grams of dry fibrous web.

In the context of glass and other cleaning situations where lower levels of liquid are required to reduce amount of liquids left on surfaces and grease cleaning efficacy is required, one embodiment includes a dry fibrous web substrate where at least about 65% of the dry fibrous web is composed of hydrophobic fibers such as polyester, polypropylene, polyethylene and the like, and lower levels of hydrophilic fibers such as wood pulp, cotton, and the like are at levels of less than about 35%. The lower level of hydrophilic fibers helps reduce how much liquid the wipe can retain while the higher level of hydrophobic fibers helps to better absorb grease.

In addition to using material composition, substrate dimension can also be used to control dosing as well as provide ergonomic appeal. In one embodiment, substrate dimensions are from about 5½ inches to about 9 inches in length, and from about 5½ inches to about 9 inches in width to comfortably fit in a hand. As such, the substrate can have dimensions such that the length and width differ by no more than about 2 inches. In the context of heavier soil cleaning, substrates can be bigger so that they can used and then folded, either once or twice, so as to contain dirt within the inside of the fold and then the wipe can be re-used. For this application, the substrate can have a length from about 5½ inches to about 13 inches and a width from about 10 inches to about 13 inches. As such, the substrate can be folded once or twice and still fit comfortably in the hand.

In addition to having substrate prepared using a mono-layer substrate, it is advantageous in some situations to have the pre-moistened substrate constructed having multiple layers. In one embodiment, the substrate consists of a multi-laminate structure comprising a pre-moistened outer layer, an impermeable film or membrane inner layer and second outer-layer which is substantially dry. To improve the wet capacity of the substrate and to protect the back layer from getting prematurely wet, an optional absorbent reservoir can be placed between the pre-moistened first outer-layer and the impermeable film or membrane. The dimensions of the reservoir can be smaller than the dimensions of the two outer layers to prevent liquid wicking from the front layer onto the back layer.

The use of a multi-laminate structure as herein described can be highly desirable in that it allows for a dry buffing step, aimed at substantially removing most of the liquid remaining on the glass following application of the wet side of the premoistened substrate on the glass. The multi-laminate structure is further advantageously used in the context of heavier soiled situations, such as those encountered on outside windows or car glass. By allowing use of a fresh, clean surface for buffing, the multi-laminate structure reduces the amount of dirty liquid pushed around by the pre-moistened substrate.

When a multi-laminate structure is used, the outer pre-moistened layer can contain at least about 30% hydrophobic fibers for oil remove and glide. The impermeable inner layer can be polyethylene, polypropylene or mixtures thereof. The composition mixture and thickness of the impermeable layer can be chosen so as to minimize, or eliminate any seepage of liquid from the pre-moistened first outer-layer to the dry second outer-layer. Those skilled in the art will appreciate that use of a reservoir core or of a high fluid capacity pre-moistened outer-layer will test the impermeable layer, such that more than one impermeable layer can be required to ensure sufficient dryness for the second outer-layer of the wipe. The reservoir, if present, can consist of treated or untreated cellulose, either as a stand alone material or as a hybrid with hydrophobic fibers. The hydrophobic content of the reservoir layer can be than about 30%, or less than about 20% by weight of the total fiber content of the layer. In one embodiment, the reservoir consists of air-laid cellulose. The second outer-layer, which is substantially dry to the touch, can consist of high absorbency cellulose or blends of cellulose and synthetic fibers.

The cleaning substrate, upon which the improved cleaning composition is loaded thereon, is made of an absorbent/adsorbent material. Typically, the cleaning substrate has at least one layer of nonwoven material. Nonlimiting examples of commercially available cleaning wipes that can be used include DuPont 8838, Dexter ZA, Dexter 10180, Dexter M10201, Dexter 8589, Ft. James 836, and Concert STD60LN, and Ahlstrom 4759. All of these cleaning wipes include a blend of polyester and wood pulp. Dexter M10201 also includes rayon, a wood pulp derivative. The loading ratio of the cleaning composition onto the cleaning wipe can be about 2-5:1, and typically about 3-4:1. The improved cleaning composition is loaded onto the cleaning wipe in any number of manufacturing methods. Typically, the cleaning substrate is soaked in the improved cleaning composition for a period of time until the desired amount of loading is achieved.

### Binder

Chemical bonding utilizes a solvent or adhesive, and U.S. Pat. No. 3,575,749 to Kroyer discloses bonding the fibrous layer with a latex binder, which may be applied to one or both sides of the web. Binders may comprise liquid emulsions, latex binders, liquid adhesives, chemical bonding agents, and mixtures thereof. The binder composition can be made using a latex adhesive commercially available as Rovene 5550 (49 percent solids styrene butadiene) available from Mallard Creek Polymers of Charlotte, N.C. Other suitable binders are available from National Starch and Chemical, including DUR-O-SET 25-149A (Tg= +9°C), NACRYLIC 25-012A (Tg=-34°C), NACRYLIC 25-4401 (Tg=23°C), NACRYLIC ABX-30-25331A, RESYN 1072 (Tg=+37°C), RESYN 1601, X-LINK 25-033A, DUR-O-SET C310, DUR-O-SET ELITE ULTRA, (vinylacetate hompolymers and copolymers), STRUCTURECOTE 1887(modified starch), NATIONAL 77-1864 (Tg=+100°C) (modified starch), TYLAC NW-4036-51-9 (styrene-butadiene terpolymer), and from Air Products Polymers, including Flexbond AN214 (Tg=+30°C)(vinylacetate copolymer). A latex emulsion or solution, typically in an aqueous medium, is applied to one or both surfaces of the web to provide a latex coating which partially impregnates the web, and upon curing stabilizes the structure. The latex may be applied to the web by any suitable means such as spraying, brushing, flooding, rolling, and the like.

### Surfactant

In one embodiment, the disposable cleaning substrate is impregnated with a wet surfactant solution. In another embodiment herein the disposable cleaning substrate according to the present invention are dry-to-the-touch. By 'dry-to-the-touch' it is meant that the substrate is free of water or other solvents in an amount that would make them feel damp or wet to the touch as compared to the touch of a wet wipe. In another embodiment, the disposable cleaning substrate contains no cleaning composition.

The compositions herein may contain one or more surfactants selected from anionic, nonionic, cationic, ampholytic, amphoteric and zwitterionic surfactants and mixtures thereof. A typical listing of anionic, nonionic, ampholytic, and zwitterionic classes, and species of these surfactants, is given in U.S. Pat. 3,929,678 to Laughlin and Heuring. A list of suitable cationic surfactants is given in U.S. Pat. 4,259,217 to Murphy. Where present, ampholytic, amphotenic and zwitteronic surfactants are generally used in combination with one or more anionic and/or nonionic surfactants. The surfactants may be present at a level of from 0% to 5%, or from 0.001 % to 2%, or from 0.01% to 0.5% by weight. Where concentrated cleaning solutions are required, the surfactants may be present at a level of from 5% to 50%, or from 5% to 20%, or from 5% to 10% by weight. Where dry-to-the-touch cleaning solutions are required, the surfactants may be present at a level of from 50% to 100%, or from 50% to 90%, or from 50% to 70% by weight.

The compositions herein may comprise an anionic surfactant. Essentially any anionic surfactants useful for detersive purposes can be comprised in the detergent composition. These can include salts (including, for example, sodium, potassium, ammonium, and substituted ammonium salts such as mono-, di- and triiethanolamine salts) of the anionic sulfate, sulfonate, carboxylate and sarcosinate surfactants. Suitable are surfactants systems comprising a sulfonate or a sulfate surfactant, an alkyl sulfate, a linear or branched alkyl benzene sulfonate, or an alkyldiphenyloxide disulfonate, as described herein.

Other anionic surfactants include the isethionates such as the acyl isethionates, N-acyl taurates, fatty acid amides of methyl tauride, alkyl succinates and sulfosuccinates, monoesters of sulfosuccinate (especially saturated and unsaturated C12- C18 monoesters) diesters of sulfosuccinate (especially saturated and unsaturated C6-C14 diesters), N-acyl sarcosinates. Resin acids and hydrogenated resin acids are also suitable, such as rosin, hydrogenated rosin, and resin acids and hydrogenated resin acids present in or derived from tallow oil. Anionic sulfate surfactants suitable for use herein include the linear and branched primary and secondary alkyl sulfates, alkyl ethoxysulfates, fatty oleoyl glycerol sulfates, alkyl phenol ethylene oxide ether sulfates, the C5-C17acyl-N-(C1-C4 alkyl) and -N-(C1-C2 hydroxyalkyl) glucamine sulfates, and sulfates of alkylpolysacchanides such as the sulfates of alkylpolyglucoside (the nonionic nonsulfated compounds being described herein). Alkyl sulfate surfactants are preferably selected from the linear and branched primary C10-C 18 alkyl sulfates, more preferably the C11-C15 branched chain alkyl sulfates and the C12-C14 linear chain alkyl sulfates.

Alkyl ethoxysulfate surfactants may be selected from the group consisting of the C10-C18 alkyl sulfates which have been ethoxylated with from 0.5 to 20 moles of ethylene oxide per molecule. Suitably, the alkyl ethoxysulfate surfactant is a C11-C18, or C11-C15 alkyl sulfate which has been ethoxylated with from 0. 5 to 7, or from 1 to 5, moles of ethylene oxide per molecule. A suitable aspect of the invention employs mixtures of the preferred alkyl sulfate and/ or sulfonate and alkyl ethoxysulfate surfactants. Such mixtures have been disclosed in PCT Patent App. WO 93/18124.

Anionic sulfonate surfactants suitable for use herein include the salts of C5-C20 linear alkylbenzene sulfonates, alkyl ester sulfonates, C6-C22 primary or secondary alkane sulfonates, C6-C24 olefin sulfonates, sulfonated polycarboxylic acids, alkyl glycerol sulfonates, fatty acyl glycerol sulfonates, fatty oleyl glycerol sulfonates, and any mixtures thereof. Suitable anionic carboxylate surfactants include the alkyl ethoxy carboxylates, the alkyl polyethoxy polycarboxylate surfactants and the soaps ('alkyl carboxyls'), especially certain secondary soaps as described herein. Suitable alkyl ethoxy carboxylates include those with the formula RO(CH2CH20)x CH2C00^{*-*}M⁺ wherein R is a C6 to C18 alkyl group, x ranges from 0 to 10, and the ethoxylate distribution is such that, on a weight basis, the amount of material where x is 0 is less than 20 % and M is a cation. Suitable alkyl polyethoxypolycarboxylate surfactants include those having the formula RO-(CHR¹-CHR²-0)-R³ wherein R is a C6 to C18 alkyl group, x is from 1 to 25, R¹ and R² are selected from the group consisting of hydrogen, methyl acid radical, succinic acid radical, hydroxysuccinic acid radical, and mixtures thereof, and R³ is selected from the group consisting of hydrogen, substituted or unsubstituted hydrocarbon having between 1 and 8 carbon atoms, and mixtures thereof.

Suitable soap surfactants include the secondary soap surfactants that contain a carboxyl unit connected to a secondary carbon. Preferred secondary soap surfactants for use herein are water-soluble members selected from the group consisting of the water-soluble salts of 2-methyl-1-undecanoic acid, 2-ethyl-1-decanoic acid, 2-propyl-1-nonanoic acid, 2-butyl-1-octanoic acid and 2-pentyl-1-heptanoic acid. Certain soaps may also be included as suds suppressors.

Other suitable anionic surfactants are the alkali metal sarcosinates of formula R-CON (R¹) CH-)COOM, wherein R is a C5-C17 linear or branched alkyl or alkenyl group, R¹ is a C1-C4 alkyl group and M is an alkali metal ion. Preferred examples are the myristyl and oleoyl methyl sarcosinates in the form of their sodium salts.

Essentially any alkoxylated nonionic surfactants are suitable herein. The ethoxylated and propoxylated nonionic surfactants are preferred. Preferred alkoxylated surfactants can be selected from the classes of the nonionic condensates of alkyl phenols, nonionic ethoxylated alcohols, nonionic ethoxylated/propoxylated fatty alcohols, nonionic ethoxylate/propoxylate condensates with propylene glycol, and the nonionic ethoxylate condensation products with propylene oxide/ ethylene diamine adducts.

The condensation products of aliphatic alcohols with from 1 to 25 moles of alkylene oxide, particularly ethylene oxide and/or propylene oxide, are suitable for use herein. The alkyl chain of the aliphatic alcohol can either be straight or branched, primary or secondary, and generally contains from 6 to 22 carbon atoms. Particularly preferred are the condensation products of alcohols having an alkyl group containing from 8 to 20 carbon atoms with from 2 to 10 moles of ethylene oxide per mole of alcohol.

Polyhydroxy fatty acid amides suitable for use herein are those having the structural formula R²CONR¹Z wherein: R¹ is H, C1-C4 hydrocarbyl, 2-hydroxyethyl, 2-hydroxypropyl, ethoxy, propoxy, or a mixture thereof, preferable C1-C4 alkyl, more preferably C 1 or C2 alkyl, most preferably C 1 alkyl (i.e., methyl); and R² is a C5-C31 hydrocarbyl, preferably straight-chain C5-C19 alkyl or alkenyl, more preferably straight-chain C9-C17 alkyl or alkenyl, most preferably straight-chain C11-C17 alkyl or alkenyl, or mixture thereof-, and Z is a polyhydroxyhydrocarbyl having a linear hydrocarbyl chain with at least 3 hydroxyls directly connected to the chain, or an alkoxylated derivative (preferably ethoxylated or propoxylated) thereof Z preferably will be derived from a reducing sugar in a reductive amination reaction; more preferably Z is a glycityl.

Suitable fatty acid amide surfactants include those having the formula: R¹CON(R²)2 wherein R¹ is an alkyl group containing from 7 to 21, preferably from 9 to 17 carbon atoms and each R² is selected from the group consisting of hydrogen, C1-C4 alkyl, C1-C4 hydroxyalkyl, and -(C2H40)xH, where x is in the range of from 1 to 3.

Suitable alkylpolysaccharides for use herein are disclosed in U.S. Pat. 4,565,647 to Llenado, having a hydrophobic group containing from 6 to 30 carbon atoms and a polysaccharide, e.g., a polyglycoside, hydrophilic group containing from 1.3 to 10 saccharide units. Preferred alkylpolyglycosides have the formula: R²O(CnH2nO)t(glycosyI)x wherein R² is selected from the group consisting of alkyl, alkylphenyl, hydroxyalkyl, hydroxyalkylphenyl, and mixtures thereof in which the alkyl groups contain from 10 to 18 carbon atoms; n is 2 or 3; t is from 0 to 10, and x is from 1.3 to 8. The glycosyl is preferably derived from glucose.

Suitable amphoteric surfactants for use herein include the amine oxide surfactants and the alkyl amphocarboxylic acids. Suitable amine oxides include those compounds having the formula R³(OR⁴)ₓNO(R⁵)2 wherein R³ is selected from an alkyl, hydroxyalkyl, acylamidopropyl and alkylphenyl group, or mixtures thereof, containing from 8 to 26 carbon atoms; R⁴ is an alkylene or hydroxyalkylene group containing from 2 to 3 carbon atoms, or mixtures thereof-, x is from 0 to 5, preferably from 0 to 3; and each R⁵ is an alkyl or hydroxyalkyl group containing from 1 to 3, or a polyethylene oxide group containing from 1 to 3 ethylene oxide groups. Preferred are C10-C18 alkyl dimethylamine oxide, and C10-18 acylamido alkyl dimethylamine oxide. A suitable example of an alkyl amphodicarboxylic acid is Miranol(TM) C2M Conc. manufactured by Miranol, Inc., Dayton, NJ.

Zwitterionic surfactants can also be incorporated into the detergent compositions in accord with the invention. These surfactants can be broadly described as derivatives of secondary and tertiary amines, derivatives of heterocyclic secondary and tertiary amines, or derivatives of quaternary ammonium, quaternary phosphonium or tertiary sulfonium compounds. Betaine and sultaine surfactants are exemplary zwittenionic surfactants for use herein.

Suitable betaines are those compounds having the formula R(R¹)₂N⁺R²COO⁻ wherein R is a C6-C18 hydrocarbyl. group, each R¹ is typically C1-C3 alkyl, and R² is a C1-C5 hydrocarbyl group. Preferred betaines are C12-18 dimethyl-ammonio hexanoate and the C10-18 acylamidopropane (or ethane) dimethyl (or diethyl) betaines. Complex betaine surfactants are also suitable for use herein.

Suitable cationic surfactants to be used herein include the quaternary ammonium surfactants. Preferably the quaternary ammonium surfactant is a mono C6-C 16, preferably C6-C 10 N-alkyl or alkenyl ammonium surfactants wherein the remaining N positions are substituted by methyl, hydroxyethyl or hydroxypropyl groups. Preferred are also the mono-alkoxylated and bis-alkoxylated amine surfactants.

Another suitable group of cationic surfactants which can be used in the detergent compositions or components thereof herein are cationic ester surfactants. The cationic ester surfactant is a, preferably water dispersible, compound having surfactant properties comprising at least one ester (i.e. -COO-) linkage and at least one cationically charged group. Suitable cationic ester surfactants, including choline ester surfactants, have for example been disclosed in U.S. Pat. Nos. 4,228,042, 4,239,660 and 4,260,529.

In one preferred aspect the ester linkage and cationically charged group are separated from each other in the surfactant molecule by a spacer group consisting of a chain comprising at least three atoms (i.e. of three atoms chain length), preferably from three to eight atoms, more preferably from three to five atoms, most preferably three atoms. The atoms forming the spacer group chain are selected from the group consisting, of carbon, nitrogen and oxygen atoms and any mixtures thereof, with the proviso that any nitrogen or oxygen atom in said chain connects only with carbon atoms in the chain. Thus spacer groups having, for example, -0-0- (i.e. peroxide), -N-N-, and -N-0- linkages are excluded, whilst spacer groups having, for example -CH2-0- CH2- and -CH2-NH-CH2- linkages are included. In a preferred aspect the spacer group chain comprises only carbon atoms, most preferably the chain is a hydrocarbyl chain.

Highly preferred herein are cationic mono-alkoxylated amine surfactants preferably of the general formula: R¹R²R³N⁺ApR⁴ X⁻ wherein R¹ is an alkyl or alkenyl moiety containing from about 6 to about 18 carbon atoms, preferably 6 to about 16 carbon atoms, most preferably from about 6 to about 14 carbon atoms; R² and R³ are each independently alkyl groups containing from one to about three carbon atoms, preferably methyl, most preferably both R² and R³ are methyl groups; R⁴ is selected from hydrogen (preferred), methyl and ethyl; X- is an anion such as chloride, bromide, methylsulfate, sulfate, or the like, to provide electrical neutrality; A is a alkoxy group, especially a ethoxy, propoxy or butoxy group; and p is from 0 to about 30, preferably 2 to about 15, most preferably 2 to about 8. Preferably the ApR⁴ group in the formula has p=1 and is a hydroxyalkyl group, having no greater than 6 carbon atoms whereby the -OH group is separated from the quaternary ammonium nitrogen atom by no more than 3 carbon atoms. Particularly preferred ApR⁴ groups are -CH2CH2-OH, -CH2CH2CH2-OH, -CH2CH(CH3)-OH and -CH(CH3)CH2-OH, with -CH2CH2-OH being particularly preferred. Preferred R¹ groups are linear alkyl groups. Linear R¹ groups having from 8 to 14 carbon atoms are preferred.

Another highly preferred cationic mono-alkoxylated amine surfactants for use herein are of the formula R¹(CH3)(CH3)N⁺(CH2CH20)₂₋₅H X⁻ wherein R¹ is C10-C18 hydrocarbyl and mixtures thereof, especially C10-C14 alkyl, preferably C10 and C12 alkyl, and X is any convenient anion to provide charge balance, preferably chloride or bromide.

As noted, compounds of the foregoing type include those wherein the ethoxy (CH2CH2O) units (EO) are replaced by butoxy, isopropoxy [CH(CH3)CH2O] and [CH2CH(CH3)O] units (i-Pr) or n-propoxy units (Pr), or mixtures of EO and/or Pr and/or i-Pr units.

The cationic bis-alkoxylated amine surfactant preferably has the general formula: R¹R²N⁺ ApR³A'qR⁴ X⁻ wherein R¹ is an alkyl or alkenyl moiety containing from about 8 to about 18 carbon atoms, preferably 10 to about 16 carbon atoms, most preferably from about 10 to about 14 carbon atoms; R² is an alkyl group containing from one to three carbon atoms, preferably methyl; R³ and R⁻⁴ can vary independently and are selected from hydrogen (preferred), methyl and ethyl, X⁻ is an anion such as chloride, bromide, methylsulfate, sulfate, or the like, sufficient to provide electrical neutrality. A and A' can vary independently and are each selected from C1-C4 alkoxy, especially ethoxy, (i.e., -CH2CH2O-), propoxy, butoxy and mixtures thereof, p is from 1 to about 30, preferably 1 to about 4 and q is from 1 to about 30, preferably 1 to about 4, and most preferably both p and q are 1.

Highly preferred cationic bis-alkoxylated amine surfactants for use herein are of the formula R¹CH3N⁺(CH2CH20H)(CH2CH20H) X⁻ wherein R¹ is C10-C18 hydrocarbyl and mixtures thereof, preferably C10, C12, C 14 alkyl and mixtures thereof X⁻ is any convenient anion to provide charge balance, preferably chloride. With reference to the general cationic bis-alkoxylated amine structure noted above, since in a preferred compound R¹ is derived from (coconut) C12-C14 alkyl fraction fatty acids, R² is methyl and ApR³ and A'qR⁴ are each monoethoxy.

Other cationic bis-alkoxylated amine surfactants useful herein include compounds of the formula: R¹R²N⁺-(CH2CH2O)ₚH-(CH2CH2O)_{q}H X⁻ wherein R¹ is C10-C18 hydrocarbyl, preferably C10-C14 alkyl, independently p is 1 to about 3 and q is 1 to about 3, R² is C1-C3 alkyl, preferably methyl, and X⁻ is an anion, especially chloride or bromide.

Other compounds of the foregoing type include those wherein the ethoxy (CH2CH2O) units (EO) are replaced by butoxy (Bu) isopropoxy [CH(CH3)CH2O] and [CH2CH(CH3)O] units (i-Pr) or n-propoxy units (Pr), or mixtures of EO and/or Pr and/or i-Pr units.

The inventive compositions may include at least one fluorosurfactant selected from nonionic fluorosurfactants, cationic fluorosurfactants, and mixtures thereof which are soluble in the aqueous compositions being taught herein, particularly compositions which do not include further detersive surfactants, or further organic solvents, or both. Particularly useful nonionic fluorosurfactant compounds are found among the materials presently commercially marketed under the tradename Fluorad® (ex. 3M Corp.) Exemplary useful fluorosurfactants include those sold as Fluorad® FC-740, generally described to be fluorinated alkyl esters; Fluorad® FC-430, generally described to be fluorinated alkyl esters; Fluorad® FC-431, generally described to be fluorinated alkyl esters; and, Fluorad® FC-170-C, which is generally described as being fluorinated alkyl polyoxyethlene ethanols.

An especially useful nonionic fluorosurfactant compounds include those which is believed to conform to the following formulation: CₙF₂ₙ₊₁SO₂N(C₂H₅)(CH₂CH₂O)ₓCH₃ wherein: n has a value of from 1-12, preferably from 4-12, most preferably 8; x has a value of from 4-18, preferably from 4-10, most preferably 7; which is described to be a nonionic fluorinated alkyl alkoxylate and which is sold as Fluorad® FC-171 (ex. 3M Corp., formerly Minnesota Mining and Manufacturing Co.).

Additionally particularly useful nonionic fluorosurfactant compounds are also found among the materials marketed under the tradename ZONYL® (DuPont Performance Chemicals). These include, for example, ZONYL® FSO and ZONYL® FSN. These compounds have the following formula: RfCH₂CH₂O(CH₂CH₂O)ₓH where Rf is F(CF₂CF₂)_{y}. For ZONYL® FSO, x is 0 to about 15 and y is 1 to about 7. For ZONYL® FSN, x is 0 to about 25 and y is 1 to about 9.

An example of a useful cationic fluorosurfactant compound has the following structure: CₙF₂ₙ₊₁SO₂NHC₃H₆N⁺ (CH₃)₃I⁻ where n~8. This cationic fluorosurfactant is available under the tradename Fluorad® FC-135 from 3M. Another example of a useful cationic fluorosurfactant is F₃ -(CF₂)ₙ-(CH₂)ₘSCH₂CHOH-CH₂ -N⁺R₁R₂R₃ Cl⁻ wherein: n is 5-9 and m is 2, and R₁, R₂ and R₃ are -CH₃. This cationic fluorosurfactant is available under the tradename ZONYL® FSD (available from DuPont, described as 2-hydroxy-3-((gamma-omega-perfluoro- C₆₋₂₀-alkyl)thio)-N,N,N-trimethyl-1-propyl ammonium chloride). Other cationic fluorosurfactants suitable for use in the present invention are also described in EP 866,115 to Leach and Niwata.

The fluorosurfactant selected from the group of nonionic fluorosurfactant, cationic fluorosurfactant, and mixtures thereof may be present in amounts of from 0.001 to 5% wt., preferably from 0.01 to 1% wt., and more preferably from 0.01 to 0.5% wt.

### Solvent

The cleaning compositions optionally contain organic solvents. Suitable organic solvents include, but are not limited to, C₁₋₆ alkanols, C₁₋₆ diols, C₁₋₁₀ alkyl ethers of alkylene glycols, C₃₋₂₄ alkylene glycol ethers, polyalkylene glycols, short chain carboxylic acids, short chain esters, isoparafinic hydrocarbons, mineral spirits, alkylaromatics, terpenes, terpene derivatives, terpenoids, terpenoid derivatives, formaldehyde, and pyrrolidones. Alkanols include, but are not limited to, methanol, ethanol, n-propanol, isopropanol, butanol, pentanol, and hexanol, and isomers thereof. Diols include, but are not limited to, methylene, ethylene, propylene and butylene glycols. Alkylene glycol ethers include, but are not limited to, ethylene glycol monopropyl ether, ethylene glycol monobutyl ether, ethylene glycol monohexyl ether, diethylene glycol monopropyl ether, diethylene glycol monobutyl ether, diethylene glycol monohexyl ether, propylene glycol methyl ether, propylene glycol ethyl ether, propylene glycol n-propyl ether, propylene glycol monobutyl ether, propylene glycol t-butyl ether, di- or tri-polypropylene glycol methyl or ethyl or propyl or butyl ether, acetate and propionate esters of glycol ethers. Short chain carboxylic acids include, but are not limited to, acetic acid, glycolic acid, lactic acid and propionic acid. Short chain esters include, but are not limited to, glycol acetate, and cyclic or linear volatile methylsiloxanes. Water insoluble solvents such as isoparafinic hydrocarbons, mineral spirits, alkylaromatics, terpenoids, terpenoid derivatives, terpenes, and terpenes derivatives can be mixed with a water soluble solvent when employed.

Examples of organic solvent having a vapor pressure less than 0.1 mm Hg (20° C) include, but are not limited to, dipropylene glycol n-propyl ether, dipropylene glycol t-butyl ether, dipropylene glycol n-butyl ether, tripropylene glycol methyl ether, tripropylene glycol n-butyl ether, diethylene glycol propyl ether, diethylene glycol butyl ether, dipropylene glycol methyl ether acetate, diethylene glycol ethyl ether acetate, and diethylene glycol butyl ether acetate (all available from ARCO Chemical Company).

The solvents are preferably present at a level of from 0.001% to 10%, more preferably from 0.01 % to 10%, most preferably from 1% to 4% by weight.

### Additional adjuncts

The cleaning compositions optionally contain one or more of the following adjuncts: stain and soil repellants, lubricants, odor control agents, perfumes, fragrances and fragrance release agents, and bleaching agents. Other adjuncts include, but are not limited to, acids, electrolytes, dyes and/or colorants, solubilizing materials, stabilizers, thickeners, defoamers, hydrotropes, cloud point modifiers, preservatives, and other polymers. The solubilizing materials, when used, include, but are not limited to, hydrotropes (e.g. water soluble salts of low molecular weight organic acids such as the sodium and/or potassium salts of toluene, cumene, and xylene sulfonic acid). The acids, when used, include, but are not limited to, organic hydroxy acids, citric acids, keto acid, and the like. Electrolytes, when used, include, calcium, sodium and potassium chloride. Thickeners, when used, include, but are not limited to, polyacrylic acid, xanthan gum, calcium carbonate, aluminum oxide, alginates, guar gum, methyl, ethyl, clays, and/or propyl hydroxycelluloses. Defoamers, when used, include, but are not limited to, silicones, aminosilicones, silicone blends, and/or silicone/ hydrocarbon blends. Bleaching agents, when used, include, but are not limited to, peracids, hypohalite sources, hydrogen peroxide, and/or sources of hydrogen peroxide.

Preservatives, when used, include, but are not limited to, mildewstat or bacteriostat, methyl, ethyl and propyl parabens, short chain organic acids (e.g. acetic, lactic and/or glycolic acids), bisguanidine compounds (e.g. Dantagard and/or Glydant) and/or short chain alcohols (e.g. ethanol and/or IPA). The mildewstat or bacteriostat includes, but is not limited to, mildewstats (including non-isothiazolone compounds) include Kathon GC, a 5-chloro-2-methyl-4-isothiazolin-3-one, KATHON ICP, a 2-methyl-4-isothiazolin-3-one, and a blend thereof, and KATHON 886, a 5-chloro-2-methyl-4-isothiazolin-3-one, all available from Rohm and Haas Company; BRONOPOL, a 2-bromo-2-nitropropane 1, 3 diol, from Boots Company Ltd., PROXEL CRL, a propyl-p-hydroxybenzoate, from ICI PLC; NIPASOL M, an o-phenyl-phenol, Na⁺ salt, from Nipa Laboratories Ltd., DOWICIDE A, a 1,2-Benzoisothiazolin-3-one, from Dow Chemical Co., and IRGASAN DP 200, a 2,4,4'-trichloro-2-hydroxydiphenylether, from Ciba-Geigy A.G.

### Antimicrobial Agent

Antimicrobial agents include quaternary ammoniom compounds and phenolics. Non-limiting examples of these quaternary compounds include benzalkonium chlorides and/or substituted benzalkonium chlorides, di(C₆-C₁₄)alkyl di short chain (C₁₋₄ alkyl and/or hydroxyalkl) quaternaryammonium salts, N-(3-chloroallyl) hexaminium chlorides, benzethonium chloride, methylbenzethonium chloride, and cetylpyridinium chloride. Other quaternary compounds include the group consisting of dialkyldimethyl ammonium chlorides, alkyl dimethylbenzyl-ammonium chlorides, dialkylmethylbenzylammonium chlorides, and mixtures thereof. Biguanide antimicrobial actives including, but not limited to polyhexamethylene biguanide hydrochloride, p-chlorophenyl biguanide; 4-chlorobenzhydryl biguanide, halogenated hexidine such as, but not limited to, chlorhexidine (1,1'-hexamethylene -bis-5-(4-chlorophenyl biguanide) and its salts are also in this class.

### Builder/Buffer

The cleaning composition may include a builder or buffer, which increase the effectiveness of the surfactant. The builder or buffer can also function as a softener and/or a sequestering agent in the cleaning composition. A variety of builders or buffers can be used and they include, but are not limited to, phosphate-silicate compounds, zeolites, alkali metal, ammonium and substituted ammonium polyacetates, trialkali salts of nitrilotriacetic acid, carboxylates, polycarboxylates, carbonates, bicarbonates, polyphosphates, aminopolycarboxylates, polyhydroxysulfonates, and starch derivatives.

Builders or buffers can also include polyacetates and polycarboxylates. The polyacetate and polycarboxylate compounds include, but are not limited to, sodium, potassium, lithium, ammonium, and substituted ammonium salts of ethylenediamine tetraacetic acid, ethylenediamine triacetic acid, ethylenediamine tetrapropionic acid, diethylenetriamine pentaacetic acid, nitrilotriacetic acid, oxydisuccinic acid, iminodisuccinic acid, mellitic acid, polyacrylic acid or polymethacrylic acid and copolymers, benzene polycarboxylic acids, gluconic acid, sulfamic acid, oxalic acid, phosphoric acid, phosphonic acid, organic phosphonic acids, acetic acid, and citric acid. These builders or buffers can also exist either partially or totally in the hydrogen ion form.

The builder agent can include sodium and/or potassium salts of EDTA and substituted ammonium salts. The substituted ammonium salts include, but are not limited to, ammonium salts of methylamine, dimethylamine, butylamine, butylenes-diamine, propylamine, triethylamine, trimethylamine, monoethanolamine, diethanolamine, triethanolamine, isopropanolamine, ethylenediamine tetraacetic acid and propanolamine.

Buffering and pH adjusting agents, when used, include, but are not limited to, organic acids, mineral acids, alkali metal and alkaline earth salts of silicate, metasilicate, polysilicate, borate, hydroxide, carbonate, carbamate, phosphate, polyphosphate, pyrophosphates, triphosphates, tetraphosphates, ammonia, hydroxide, monoethanolamine, monopropanolamine, diethanolamine, dipropanolamine, triethanolamine, and 2-amino-2methylpropanol. Preferred buffering agents for compositions of this invention are nitrogen-containing materials. Some examples are amino acids such as lysine or lower alcohol amines like mono-, di-, and triethanolamine. Other preferred nitrogen-containing buffering agents are tri(hydroxymethyl) amino methane (TRIS), 2-amino-2-ethyl-1,3-propanediol, 2-amino-2-methyl- propanol, 2- amino-2-methyl-1,3-propanol, disodium glutamate, N-methyl diethanolarnide, 2-dimethylamino- 2-methylpropanol (DMAMP), 1,3-bis(methylamine)-cyclohexane, 1,3-diamino-propanol N,N'- tetra-methyl-1,3-diamino-2-propanol, N,N-bis(2-hydroxyethyl)glycine (bicine) and N-tris(hydroxymethyl)methyl glycine (tricine). Other suitable buffers include ammonium carbamate, citric acid, acetic acid. Mixtures of any of the above are also acceptable. Useful inorganic buffers/alkalinity sources include ammonia, the alkali metal carbonates and alkali metal phosphates, e.g., sodium carbonate, sodium polyphosphate. For additional buffers see WO 95/07971, which is incorporated herein by reference. Other preferred pH-adjusting agents include sodium or potassium hydroxide.

When employed, the builder, buffer, or pH adjusting agent comprises at least about 0.001% and typically about 0.01-5%, or about 0.01-2% of the cleaning composition.

### Polymers

In optional embodiments of the invention, polymeric material that improves the hydrophilicity of the surface being treated is incorporated into the present compositions. The increase in hydrophilicity provides improved final appearance by providing "sheeting" of the water from the surface and/or spreading of the water on the surface, and this effect is preferably seen when the surface is rewetted and even when subsequently dried after the rewetting. Polymer substantivity is beneficial as it prolongs the sheeting and cleaning benefits. Another potential feature of these polymers is lack of visible residue upon drying. In optional embodiments, the polymer comprises 0.001 to 5%, preferably 0.01 to 1%, and most preferably 0.1 to 0.5% of the cleaning composition.

In general, the aqueous polymer containing composition may comprise a water soluble or water dispersible polymer. The hydrophilic polymers preferably are attracted to surfaces and are absorbed thereto without covalent bonds. Examples of suitable polymers include the polymers and co-polymers of N, N-dimethyl acrylamide, acrylamide, and certain monomers containing quaternary ammonium groups or amphoteric groups that favor substantivity to surfaces, along with comonomers that favor adsorption of water, such as, for example, acrylic acid and other acrylate salts, sulfonates, betaines, and ethylene oxides.

With respect to the synthesis of the water soluble or water dispersible cationic copolymer, the level of the first monomer, which has a permanent cationic charge or that is capable of forming a cationic charge on protonation, is typically between 3 and 80 mol% and preferably 10 to 60 mol% of the copolymer. The level of second monomer, which is an acidic monomer that is capable of forming an anionic charge in the composition, when present is typically between 3 and 80 mol% and preferably 10 to 60 mol% of the copolymer. The level of the third monomer, which has an uncharged hydrophilic group, when present is typically between 3 and 80 mol% and preferably 10 to 60 mol% of the copolymer. When present, the level of uncharged hydrophobic monomer is less than about 50 mol% and preferably less than 10 mol% of the copolymer. The molar ratio of the first monomer to the second monomer typically ranges from 19:1 to 1:10 and preferably ranges from 9:1 to 1:6. The molar ratio of the first monomer to the third monomer is typically ranges from 4:1 to 1:4 and preferably ranges from 2:1 to 1:2.

The average molecular weight of the copolymer typically ranges from about 5,000 to about 10,000,000, with the preferred molecular weight range depending on the polymer composition with the proviso that the molecular weight is selected so that the copolymer is water soluble or water disperible to at least 0.01 % by weight in distilled water at 25°C.

Examples of permanently cationic monomers include, but are not limited to, quaternary ammonium salts of substituted acrylamide, methacrylamide, acrylate and methacrylate, such as trimethylammoniumethylmethacrylate, trimethylammoniumpropylmethacrylamide, trimethylammoniumethylmethacrylate, trimethylammoniumpropylacrylamide, 2-vinyl N-alkyl quaternary pyridinium, 4-vinyl N-alkyl quaternary pyridinium, 4- vinylbenzyltrialkylammonium, 2-vinyl piperidinium, 4-vinyl piperidinium, 3-alkyl 1-vinyl imidazolium, diallyldimethyl-ammonium, and the ionene class of internal cationic monomers as described by D. R. Berger in *Cationic Surfactants, Organic Chemistry,* edited by J. M. Richmond, Marcel Dekker, New York, 1990, ISBN 0-8247-8381-6, which is incorporated herein by reference. This class includes co-poly ethylene imine, co-poly ethoxylated ethylene imine and co-poly quaternized ethoxylated ethylene imine, co-poly [(dimethylimino) trimethylene (dimethylimino) hexamethylene disalt], co-poly [(diethylimino) trimethylene (dimethylimino) trimethylene disalt], co-poly [(dimethylimino) 2-hydroxypropyl salt], co-polyquarternium-2, co-polyquarternium-17, and co-polyquarternium-18, as described in the *International Cosmetic Ingredient Dictionary,* 5th Edition, edited by J. A. Wenninger and G. N. McEwen, which is incorporated herein by reference. Other cationic monomers include those containing cationic sulfonium salts such as co-poly-1-[3-methyl-4-(vinyl-benzyloxy)phenyl] tetrahydrothiophenium chloride. Especially preferred monomers are mono- and diquaternary derivatives of methacrylamide. The counterion of the cationic comonomer can be selected from, for example, chloride, bromide, iodide, hydroxide, phosphate, sulfate, hydrosulfate, ethyl sulfate, methyl sulfate, formate, and acetate.

Examples of monomers that are cationic on protonation include, but are not limited to, acrylamide, N,N-dimethylacrylamide, N,N di-isopropylacryalmide, N-viriylimidazole, N-vinylpyrrolidone, ethyleneimine, dimethylaminohydroxypropyl diethylenetriamine, dimethylaminoethylmethacrylate, dimethylaminopropylmethacrylamide, dimethylaminoethylacrylate, dimethylaminopropylacrylamide, 2-vinyl pyridine, 4-vinyl pyridine, 2-vinyl piperidine, 4-vinylpiperidine, vinyl amine, diallylamine, methyldiallylamine, vinyl oxazolidone; vinyl methyoxazolidone, and vinyl caprolactam.

Monomers that are cationic on protonation typically contain a positive charge over a portion of the pH range of 2-11. Such suitable monomers are also presented in *Water-Soluble Synthetic Polymers: Properties and Behavior,* Volume II, by P. Molyneux, CRC Press, Boca Raton, 1983, ISBN 0-8493-6136. Additional monomers can be found in the *International Cosmetic Ingredient Dictionary,* 5th Edition, edited by J. A. Wenninger and G. N. McEwen, The Cosmetic, Toiletry, and Fragrance Association, Washington D.C., 1993, ISBN 1-882621-06-9. A third source of such monomers can be found in *Encyclopedia of Polymers and Thickeners for Cosmetics,* by R. Y. Lochhead and W. R. Fron, Cosmetics & Toiletries, vol. 108, May 1993, pp 95-135. All three references are incorporated herein.

Examples of acidic monomers that are capable of forming an anionic charge in the composition include, but are not limited to, acrylic acid, methacrylic acid, ethacrylic acid, dimethylacrylic acid, maleic anhydride, succinic anhydride, vinylsulfonate, cyanoacrylic acid, methylenemalonic acid, vinylacetic acid, allylacetic acid, ethylidineacetic acid, propylidineacetic acid, crotonic acid, fumaric acid, itaconic acid, sorbic acid, angelic acid, cinnamic acid, styrylacrylic acid, citraconic acid, glutaconic acid, aconitic acid, phenylacrylic acid, acryloxypropionic acid, citraconic acid, vinylbenzoic acid, N- vinylsuccinamidic acid, mesaconic acid, methacroylalanine, acryloylhydroxyglycine, sulfoethyl methacrylate, sulfopropyl acrylate, and sulfoethyl acrylate. Preferred acid monomers also include styrenesulfonic acid, 2-methacryloyloxymethane-1-sulfonic acid, 3-methacryloyloxy-propane-1-sulfonic acid, 3-(vinyloxy)propane-1-sulfonic acid, ethylenesulfonic acid, vinyl sulfuric acid, 4-vinylphenyl sulfuric acid, ethylene phosphonic acid and vinyl phosphoric acid. Most preferred monomers include acrylic acid, methacrylic acid and maleic acid. The copolymers useful in this invention may contain the above acidic monomers and the alkali metal, alkaline earth metal, and ammonium salts thereof.

Examples of monomers having an uncharged hydrophilic group include but are not limited to vinyl alcohol, vinyl acetate, vinyl methyl ether, vinyl ethyl ether, ethylene oxide and propylene oxide. Especially preferred are hydrophilic esters of monomers, such as hydroxyalkyl acrylate esters, alcohol ethoxylate esters, alkylpolyglycoside esters, and polyethylene glycol esters of acrylic and methacrylic acid.

Finally, examples of uncharged hydrophobic monomers include, but are not limited to, C₁-C₄ alkyl esters of acrylic acid and of methacrylic acid.

The copolymers are formed by copolymerizing the desired monomers. Conventional polymerization techniques can be employed. Illustrative techniques include, for example, solution, suspension, dispersion, or emulsion polymerization. A preferred method of preparation is by precipitation or inverse suspension polymerization of the copolymer from a polymerization media in which the monomers are dispersed in a suitable solvent. The monomers employed in preparing the copolymer are preferably water soluble and sufficiently soluble in the polymerization media to form a homogeneous solution. They readily undergo polymerization to form polymers which are water-dispersable or water-soluble. The preferred copolymers contain acrylamide, methacrylamide and substituted acrylamides and methacrylamides, acrylic and methacrylic acid and esters thereof. Suitable synthetic methods for these copolymers are described, for example, in Kirk-Othmer, *Encyclopedia of Chemical Technology,* Volume 1, Fourth Ed., John Wiley & Sons.

Other examples of polymers that provide the sheeting and anti-spotting benefits are polymers that contain amine oxide hydrophilic groups. Polymers that contain other hydrophilic groups such a sulfonate, pyrrolidone, and/or carboxylate groups can also be used. Examples of desirable poly-sulfonate polymers include polyvinylsulfonate, and more preferably polystyrene sulfonate, such as those sold by Monomer-Polymer Dajac (1675 Bustleton Pike, Feasterville, Pa. 19053). A typical formula is as follows: [CH(C₆H₄SO₃Na)-CH₂]ₙ-CH(C₆H₅)-CH₂ wherein n is a number to give the appropriate molecular weight as disclosed below.

Typical molecular weights are from about 10,000 to about 1,000, 000, preferably from about 200,000 to about 700,000. Preferred polymers containing pyrrolidone functionalities include polyvinyl pyrrolidone, quatemized pyrrolidone derivatives (such as Gafquat 755N from International Specialty Products), and copolymers containing pyrrolidone, such as polyvinylpyrrolidone/dimethylaminoethyl-methacrylate (available from ISP) and polyvinyl pyrrolidone/acrylate (available from BASF). Other materials can also provide substantivity and hydrophilicity including cationic materials that also contain hydrophilic groups and polymers that contain multiple ether linkages. Cationic materials include cationic sugar and/or starch derivatives and the typical block copolymer detergent surfactants based on mixtures of polypropylene oxide and ethylene oxide are representative of the polyether materials. The polyether materials are less substantive, however.

Preferred polymers comprise water-soluble amine oxide moieties. It is believed that the partial positive charge of the amine oxide group can act to adhere the polymer to the surface of the surface substrate, thus allowing water to "sheet" more readily. To the extent that polymer anchoring promotes better "sheeting" higher molecular materials are preferred. Increased molecular weight improves efficiency and effectiveness of the amine oxide-based polymer. The preferred polymers of this invention have one or more monomeric units containing at least one N-oxide group. At least about 10%, preferably more than about 50%, more preferably greater than about 90% of said monomers forming said polymers contain an amine oxide group. These polymers can be described by the general formula: P(B) wherein each P is selected from homopolymerizable and copolymerizable moieties which attach to form the polymer backbone, preferably vinyl moieties, e.g. C(R)2--C(R)2, wherein each R is H, C1-C12 (preferably C.sub.1-C.sub.4) alkyl(ene), C6-C12 aryl(ene) and/or B; B is a moiety selected from substituted and unsubstituted, linear and cyclic C1-C12 alkyl, C1-C12 alkylene, C1-C12 heterocyclic, aromatic C6-C12 groups and wherein at least one of said B moieties has at least one amine oxide group present; u is from a number that will provide at least about 10% monomers containing an amine oxide group to about 90%; and t is a number such that the average molecular weight of the polymer is from about 2,000 to about 500,000, preferably from about 5,000 to about 250, 000, and more preferably from about 7,500 to about 200,000. Preferred polymers also include poly(4-vinylpyridine N-oxide) polymers (PVNO), wherein the average molecular weight of the polymer is from about 2,000 to about 500,000 preferably from about 5,000 to about 400,000, and more preferably from about 7,500 to about 300,000. In general, higher molecular weight polymers are preferred. Often, higher molecular weight polymers allow for use of lower levels of the wetting polymer, which can provide benefits in floor cleaner applications. The desirable molecular weight range of polymers useful in the present invention stands in contrast to that found in the art relating to polycarboxylate, polystyrene sulfonate, and polyether based additives, which prefer molecular weights in the range of 400,000 to 1,500,000. Lower molecular weights for the preferred poly-amine oxide polymers of the present invention are due to greater difficulty in manufacturing these polymers in higher molecular weight.

Some non-limiting examples of homopolymers and copolymers which can be used as water soluble polymers of the present invention are: adipic acid/dimethylaminohydroxypropyl diethylenetriamine copolymer; adipic acid/epoxypropyl diethylenetriamine copolymer; polyvinyl alcohol; methacryloyl ethyl betaine/methacrylates copolymer; ethyl acrylate/methyl methacrylate/methacrylic acid/acrylic acid copolymer; polyamine resins; and polyquatemary amine resins; poly(ethenyl-formamide); poly(vinylamine) hydrochloride; poly(vinyl alcohol-co-6% vinylamine); poly(vinyl alcohol- co-12% vinylamine); poly(vinyl alcohol-co-6% vinylamine hydrochloride); and poly(vinyl alcohol-co-12% vinylamine hydrochloride). Preferably, said copolymer and/or homopolymers are selected from the group consisting of adipic acid/dimethylaminohydroxypropyl diethylenetriamine copolymer; poly(vinylpyrrolidone/ dimethylaminoethyl methacrylate); polyvinyl alcohol; ethyl acrylate/methyl methacrylate/ethacrylic acid/acrylic acid copolymer; methacryloyl ethyl betaine/methacrylates copolymer; polyquaternary amine resins; poly(ethenyl-formamide); poly(vinylamine) hydrochloride; poly(vinyl alcohol-co-6% vinylamine); poly(vinyl alcohol- co-12% vinylamine); poly(vinyl alcohol-co-6% vinylamine hydrochloride); and poly(vinyl alcohol-co-12% vinylamine hydrochloride).

Polymers useful in the present invention can be selected from the group consisting of copolymers of hydrophilic monomers. The polymer can be linear random or block copolymers, and mixtures thereof. The term "hydrophilic" is used herein consistent with its standard meaning of having affinity for water. As used herein in relation to monomer units and polymeric materials, including the copolymers, "hydrophilic" means substantially water soluble. In this regard, "substantially water soluble" shall refer to a material that is soluble in distilled (or equivalent) water, at 25° C., at a concentration of about 0.2% by weight, and are preferably soluble at about 1% by weight. The terms "soluble", "solubility" and the like, for purposes hereof, correspond to the maximum concentration of monomer or polymer, as applicable, that can dissolve in water or other solvents to form a homogeneous solution, as is well understood to those skilled in the art.

Nonlimiting examples of useful hydrophilic monomers are unsaturated organic mono- and polycarboxylic acids, such as acrylic acid, methacrylic acid, crotonic acid, malieic acid and its half esters, itaconic acid; unsaturated alcohols, such as vinyl alcohol, allyl alcohol; polar vinyl heterocyclics, such as, vinyl caprolactam, vinyl pyridine, vinyl imidazole; vinyl amine; vinyl sulfonate; unsaturated amides, such as acrylamides, e.g., N,N-dimethylacrylamide, N-t-butyl acrylamide; hydroxyethyl methacrylate; dimethylaminoethyl methacrylate; salts of acids and amines listed above; and the like; and mixtures thereof. Some preferred hydrophilic monomers are acrylic acid, methacrylic acid, N,N- dimethyl acrylamide, N,N-dimethyl methacrylamide, N-t-butyl acrylamide, dimethylamino ethyl methacrylate, thereof, and mixtures thereof.

Polycarboxylate polymers are those formed by polymerization of monomers, at least some of which contain carboxylic functionality. Common monomers include acrylic acid, maleic acid, ethylene, vinyl pyrrolidone, methacrylic acid, methacryloylethylbetaine, etc. Preferred polymers for substantivity are those having higher molecular weights. For example, polyacrylic acid having molecular weights below about 10,000 are not particularly substantive and therefore do not normally provide hydrophilicity for three rewettings with all compositions, although with higher levels and/or certain surfactants like amphoteric and/or zwitterionic detergent surfactants, molecular weights down to about 1000 can provide some results. In general, the polymers should have molecular weights of more than about 10,000, preferably more than about 20,000, more preferably more than about 300,000, and even more preferably more than about 400,000. It has also been found that higher molecular weight polymers, e.g., those having molecular weights of more than about 3,000, 000, are extremely difficult to formulate and are less effective in providing anti-spotting benefits than lower molecular weight polymers. Accordingly, the molecular weight should normally be, especially for polyacrylates, from about 20,000 to about 3,000,000; preferably from about 20,000 to about 2,500,000; more preferably from about 300,000 to about 2,000,000; and even more preferably from about 400,000 to about 1, 500,000.

Nonlimiting examples of polymers for use in the present invention include the following: poly(vinyl pyrrolidone/acrylic acid) sold under the name "Acrylidone"® by ISP and poly(acrylic acid) sold under the name "Accumer"® by Rohm & Haas. Other suitable materials include sulfonated polystyrene polymers sold under the name Versaflex® sold by National Starch and Chemical Company, especially Versaflex 7000. The level of polymeric material will normally be less than about 0.5%, preferably from about 0.001% to about 0.4%, more preferably from about 0.01% to about 0.3%. In general, lower molecular weight materials such as lower molecular weight poly(acrylic acid), e.g., those having molecular weights below about 10;000, and especially about 2,000, do not provide good anti-spotting benefits upon rewetting, especially at the lower levels, e.g., about 0.02%. One should use only the more effective materials at the lower levels. In order to use lower molecular weight materials, substantivity should be increased, e.g., by adding groups that provide improved attachment to the surface, such as cationic groups, or the materials should be used at higher levels, e.g., more than about 0.05%.

### Water

Since the composition may be an aqueous composition, water can be, along with the solvent, a predominant ingredient. The water can be present at a level of less than 99.9%, or less than about 99%, or less than about 98%. In some embodiments, water can comprise essentially the entire composition. Deionized water is preferred.

### Method of Use

The disposable substrate can take the form of a wipe or cleaning pad. Examples of cleaning implements using a cleaning pad include U.S. Pat. 6,611,986 to Seals, WO00/71012 to Belt et al., U.S. Pat. App. 2002/0129835 to Pieroni and Foley, and WO00/27271 to Policicchio et al. Other suitable cleaning implements include US2003/0070246 to Cavalheiro; U.S. Pat. 4,455,705 to Graham; U.S. Pat. 5,003,659 to Paepke; U.S. Pat. 6,485,212 to Bomgaars et al.; U.S. Pat. 6,290,781 to Brouillet, Jr.; U.S. Pat. 5,862,565 to Lundstedt; U.S. Pat. 5,419,015 to Garcia; U.S. Pat. 5,140,717 to Castagliola; US2002/0007527 to Hart; and U.S. Pat. 6,094,771 to Egolf et al. In an embodiment of the invention, the cleaning implement comprises the tool assembly disclosed in Co-pending Application No. 10/678033, entitled "Cleaning Tool with Gripping Assembly for a Disposable Scrubbing Head", filed Sept. 30, 2003. In another embodiment of the invention, the cleaning implement comprises the tool assembly disclosed in Co-pending Application No. 10/602478, entitled "Cleaning Tool with Gripping Assembly for a Disposable Scrubbing Head", filed June 23, 2003. In another embodiment of the invention, the cleaning implement comprises the tool assembly disclosed in Co-pending Application No. 10/766179, entitled "Interchangeable Tool Heads", filed January 27, 2004. In another embodiment of the invention, the cleaning implement comprises the tool assembly disclosed in Co-pending Application No. 10/817606, entitled "Ergonomic Cleaning Pad", filed April 1,2004.

Examples of wipes include U.S. Pat. 4,276,338 to Ludwa et al., U.S. Pat. 4,448,704 to Barby, U.S. Pat. 6,673,761 to Mitra et al., U.S. Pat. 6,488,943 to Beerse et al., U.S. Pat. 6,669,391 to Policicchio et al., U.S. Pat. 6,699,825 to Rees et al., U.S. Pat. 6,228,389 to McCue et al., and U.S. Pat. 6,638,611 to Seth. Examples of other applicators include U.S. 6,726,386 to Gruenbacher et al.

The disposable substrate can be used for cleaning, disinfectancy, or sanitization on inanimate, household surfaces, including floors, counter tops, furniture, windows, walls, and automobiles. Other surfaces include stainless steel, chrome, and shower enclosures. The substrate can be also be used on animate surfaces, such as skin. The substrate can be packaged individually or together in canisters, tubs, etc. The package may contain information printed on said package comprising a instruction to use the more abrasive side to remove soil followed by using the less abrasive side to wipe the soil away. The substrate can be used with the hand, or attached to a tool or motorized tool, such as one having a handle. Examples of tools using a wipe or pad include U.S. Pat. 6,611,986 to Seals, WO00/71012 to Belt et al., U.S. Pat. App. 2002/0129835 to Pieroni and Foley, and WO00/27271 to Policicchio et al. The disposable substrate can be used for restoration, buffing, finishing, for example U.S. Pat. App. 2004/0110456 to Hartgrove et al., U.S. 6,713,413 to Kreugler, and U.S. 5,605,749 to Pike. The disposable substrate can be used for personal care applications, for example in cleansing skin as in U.S. Pat. App. 2004/01471189 to Smith et al. and U.S. 6,723,220 to Bergquist; in absorbent applications for example U.S. 5,571, 849 to DesMarais; PCT App. WO2004/044041 to KO et al., U.S. Pat. App. 2004/0193133 to Desai et al. and U.S. 6,740,070 to Agyapong et al.; and in other uses, for example, U.S. 6,759,445 to Dyatlov et al.

The substrate may have dual sided usage instructions. For example,
To clean: Use the scrubbing side of the substrate to remove tough soils. Use the smooth side to wipe dirt away. Optionally, if the scrubbing side gets dirty, fold the substrate, keeping the scrubbing side inside. Let air dry.
To sanitize: Use the smooth side of the substrate to sanitize/deodorize hard, nonporous surfaces: wipe surface; use enough substrates for treated surface to remain visibly wet for 30 seconds. Let surface dry. For highly soiled surfaces, clean excess dirt first.
To disinfect: Use the smooth side of the substrate to disinfect hard, nonporous surfaces: wipe surface to be disinfected. Use enough substrates for treated surface to remain visibly wet for 4 minutes. Let surface dry. For highly soiled surfaces, clean excess dirt first.

### EXAMPLES

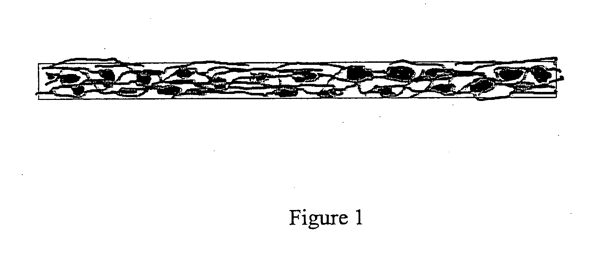

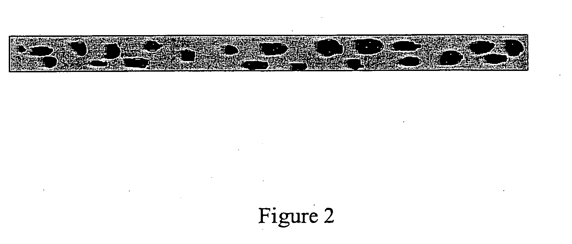

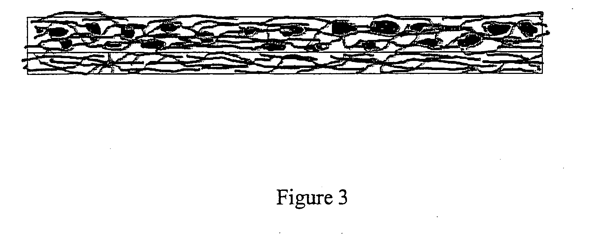

Grinding foams to a variety of sizes from greater than 100 mm to less than 0.025 mm is described in U.S. Pat. App. 2003/0181538 to Martel et al. The patent application to Martel et al. also describes a variety of foam materials. Suitable foams, such as melamine, can be ground with a granulator, for example a Nelmor SS Granulator with liquid nitrogen spray feed. Particles can be classified on a screen, for example a 1/4 inch or 1/8 inch screen. Foam can also be additionally or separately ground on a hammermill. The foam particles can be dispersed within a fibrous layer during a wetlaid or airlaid process to give a nonwoven substrate with dispersed foam particles as shown in **Figure 1.** The foam particles can be dispersed within a foam layer as shown in **Figure 2**._The foam particles can be dispersed within one layer of a multi-layer substrate as shown in **Figure 3.**

Several substrates that can be formed with bicomponent fibers and latex binder and incorporating melamine foam particles of less than 6 mm are shown in Table I. The melamine foam was of the type found in Mr.Clean Magic Eraser®. The substrate could also be laminated onto a PET or PP layer as shown in Table I or could be used alone. The PET or PP layer can vary from 0 to 300 gsm or more, depending upon the desired properties. For wipe products a smaller additional layer may be desired. For cleaning pads attached to cleaning implements, a larger additional layer may be desired. Small particle size foam particles of the above examples are suitable for incorporating with an airlaid or wetlaid process. Larger foam particles can be incorporated via other processes, for example, a hydroentangled, spunlace process or a carded process. Other foam materials can also be incorporated. With these processes, foam particles are exposed on the external surface of the substrate to provide additional cleaning action over the substrate alone. Depending upon the process conditions, a substantial portion of the foam particles may also be incorporated in the interior of the substrate.

The performance of Example B compared with commercial substrates is shown in Table II. The substrate of Example B was also judged to be more flexible during the cleaning process than Mr.Clean Magic Eraser®. Since less of the foam material is used than in a 100% foam material, the substrate is potentially less expensive than a solid foam product.

**Table I**

| | Example A | Example B | Example C | Example D |
|---|---|---|---|---|
| Melamine | 30 gsm | 30 gsm | 30 gsm | 30 gsm |
| Bicomponent fibers | 10 gsm | 10 gsm | 10 gsm | 10 gsm |
| Latex binder | 5 gsm | 5 gsm | 5 gsm | 5 gsm |
| Nonwoven carrier | PP spunbond | PP carded | PET spunbond | PET carded |

**Table II**

| Substrate | Pasta Stain Removal on Stove Top, 10 cycles |
|---|---|
| Example B | 85% |
| Mr.Clean Magic Eraser® | 80% |
| Commercial Disinfecting Wipe | 60% |

The melamine foam particles were incorporated into a 65 gsm nonwoven, comprising 65% melamine, 17% bicomponent fibers, 15% pulp fibers, and 3% latex binder (Example AA). A separate sample of the same nonwoven and same foam particles was prepared and subsequently hydroentangled (Example BB). Sample AA gave 75% crayon removal after 5 cycles on textured wallboard. The hydroentangled sample BB gave 85% crayon removal after 5 cycles on textured wallboard. The nonwoven samples were tested for abrasion resistance using a Taber Industries Abrasion Tester (250 g weights on each of 2 lever arms per sample). The cycles to failure were measured where the fabric has noticeable tears that were completely worn through. Sample AA failed after 20 cycles and the hydroentangled sample BB failed after 55 cycles.

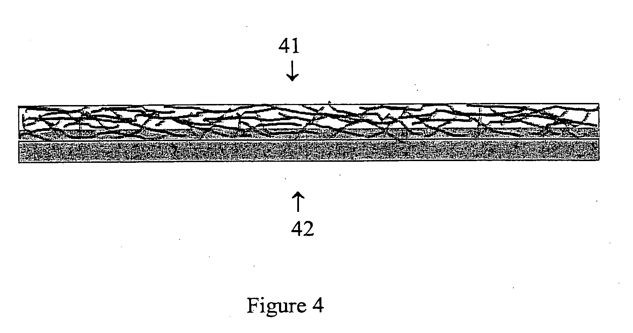

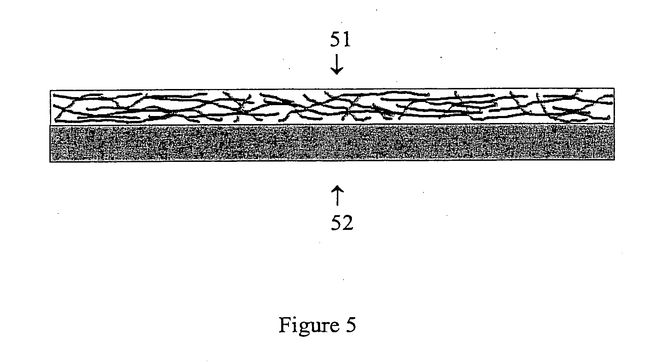

Samples were also prepared with a fibrous layer and a foam layer. A hydroentangled melamine foam layer-fibrous layer substrate can consist of a layer of melamine foam layer that has been reinforced for optimum/functional structural integrity by a staple fiber/filament fibrous web using high-pressure water-jets, as shown in Figure 4, showing the stable fiber/filament fibrous web layer 41 and the melamine foam layer 42, where some of the fibers penetrate into the foam layer forming an interface layer, comprising fibers from said fibrous layer intermingled with said foam layer. The water jets come from the side opposite the forming wire to create a physical bond between the fibrous layer and the foam layer, where the fibers penetrate the foam layer, as shown in Figure 4. A comparative example, Figure 5, shows the fibrous layer 51 and foam layer 52 without fibers penetrating the foam layer.

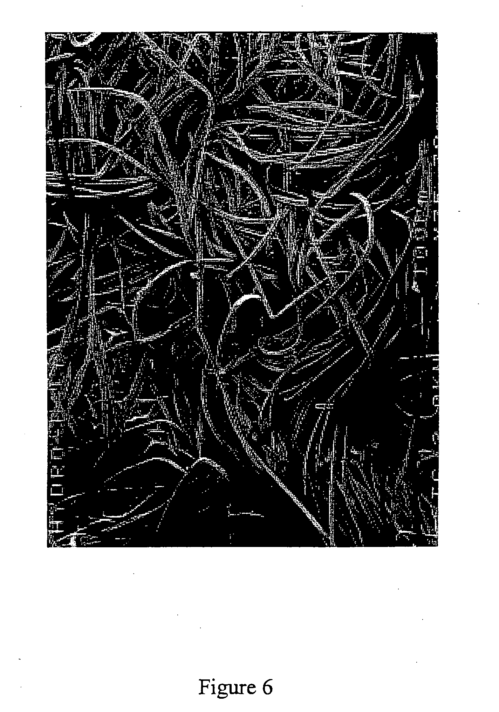

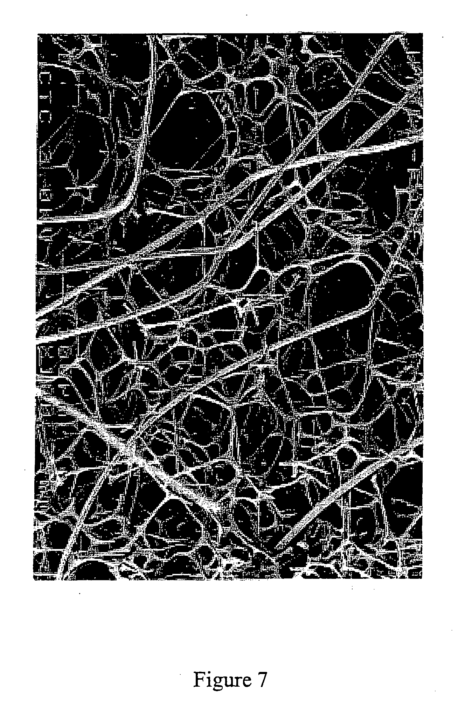

One example shown in **Figure 6** and **Figure 7** is a 1/4 inch fibrous layer hydroentangled with a 1/4 inch foam layer, where the entire structure is 50-100 gsm. SEM micrographs show distinctive differences between face and the back of the final structure, wherein the face is the side facing the water jets and back the one towards the forming wire of the hydroentangling unit. SEM's of the face in **Figure 6** show only the fibrous domain, with few interspersed regions of the melamine foam. SEM's of the back in **Figure 7** show a predominantly melamine foam domain with some fibrous regions. The final product is a fairly dense structure with considerable drape that imparts a wipe-like quality to it. The foam layer was effective in scrubbing. The foam layer can be from 0.001 to 3 inches. The fibrous layer can be any suitable nonwoven, including a nonwoven comprising PET of 1.2-3 denier. Where the foam layer was adhesively laminated to the fibrous layer, but not hydroentangled, the foam layer fell apart.

The fibrous layer can be bonded to separate foam layers on top and bottom. The foam can be an absorbent or non-absorbent foam. Where the foam does not perform a scrubbing function, the foam can perform an absorbent function or a transport function, for example, in a diaper structure.

The substrates of the invention can also be combined with cleaning compositions to form wet wipes or wet cleaning pads. The substrate can incorporate a cleaning composition that contains greater than 90% water, as in U.S. Pat. 6,673,761 to Mitra et al. The substrate can incorporate a cleaning composition that contains less than 90% water, as in U.S. Pat. 6,720,301 to Gorlin et al. The substrate can incorporate a cleaning composition that is disinfecting, sanitizing, or antimicrobial as described in U.S. Pat. 6,673,761 to Mitra et al. Foam particles or layers containing foam particles can be incorporated into existing substrates. Foam particles can also be incorporated into films, for example films of the type described in U.S. Pat. 6,586,073 to Perez et al.

## Claims

1. A disposable cleaning substrate comprising:
c. a nonwoven layer; and
d. foam particles;
e. wherein said foam particles have a mean particle diameter of less than 50 mm.

2. The disposable cleaning substrate of claim 1, wherein said nonwoven layer has an external surface and foam particles are on said external surface of said nonwoven layer.

3. The substrate of claim 1, wherein said foam particles comprise greater than 1% of said substrate.

4. The substrate of claim 1, wherein said foam particles comprise greater than 5% of said substrate.

5. The substrate of claim 1, wherein said foam particles comprise a foam selected from the group consisting of melamine foam, polyurethane foam, polyether foam, cellulosic foam, and mixtures thereof.

6. The substrate of claim 1, wherein said foam particles comprise melamine foam.

7. The substrate of claim 1, wherein said substrate additionally comprises a cleaning composition.

8. The substrate of claim 7, wherein said cleaning composition comprises an antimicrobial agent.

9. A disposable substrate comprising:
a. a layer selected from the group consisting of a fibrous layer, a foam layer, and combinations thereof; and
b. foam particles;
c. wherein said foam particles are dispersed within said layer.

10. The substrate of claim 9, wherein said foam particles are selected from the group consisting of melamine foam, polyurethane foam, polyether foam, polyester foam, polyethylene foam, hydrophilic flexible foams, cellulose foam, starch foam, foamed rubber materials, foamed silicones, high internal phase emulsion foam, vinyl foam, fiber-foam composites, and combinations thereof

11. The substrate of claim 9, wherein said foam particles comprise melamine.

12. The substrate of claim 9, wherein said substrate additionally comprises a cleaning composition.

13. The substrate of claim 12, wherein said cleaning composition comprises an antimicrobial agent.

14. The substrate of claim 9, wherein said layer is a foam layer.

15. The substrate of claim 14, wherein said foam layer comprises polyurethane foam.

16. The substrate of claim 14, wherein said foam layer comprises starch foam.

17. A disposable substrate comprising:
a. a fibrous layer;
b. a foam layer;
c. an interface layer, wherein said interface layer comprises fibers from said fibrous layer intermingled with said foam layer.

18. The substrate of claim 17, wherein said fibrous layer is adhesively laminated to said foam layer.

19. The substrate of claim 17, wherein said foam layer comprises melamine foam.

20. The substrate of claim 17, wherein said substrate additionally comprises a cleaning composition.

21. The substrate of claim 20, wherein said cleaning composition comprises an antimicrobial agent.
